# EUROPEAN PATENT APPLICATION

(11) **EP 4 753 252 A1**
(43) Date of publication of application: **03.06.2026**
(21) Application number: 24916780.0
(22) Date of filing: 28.12.2024
(51) Int. Cl.: H04N 5/262

(54) **METHOD FOR ADJUSTING VIDEO DURATION, ELECTRONIC DEVICE, STORAGE MEDIUM, AND CHIP**

(30) Priority: 10.01.2024 CN 202410040059
(71) Applicant: Honor Device Co., Ltd., Shenzhen, Guangdong 518040 (CN)
(72) Inventor: YANG, Haining, Shenzhen, Guangdong 518040 (CN)
(74) Representative: Isarpatent
(86) International application number: PCT/CN2024/143537
(87) International publication number: WO 2025/148733

(57) **Abstract**

This application provides a video duration adjustment method, an electronic device, a storage medium, and a chip, and relates to the field of terminal device technologies. In this method, an electronic device may be controlled, in a voice form, to adjust duration of a generated video. In a specific implementation, a duration adjustment strategy may be determined based on a voice of a user: "extend or shorten by t seconds", "adjust to about t seconds", or "adjust to more than or less than t seconds". Different manners of calculating duration of a new video may be set for different adjustment strategies. After the duration of the new video is obtained, duration of each segment in the video is updated based on a difference between the duration of the new video and duration of an original video, so that the duration of the original video is adjusted to obtain the new video. By using this method, efficiency of adjusting duration of a video can be improved, and user experience can be improved.

## Description

This application claims priority to Chinese Patent Application No. 202410040059.7, filed with the China National Intellectual Property Administration on January 10, 2024, and entitled "VIDEO DURATION ADJUSTMENT METHOD, ELECTRONIC DEVICE, STORAGE MEDIUM, AND CHIP", which is incorporated herein by reference in its entirety.

### TECHNICAL FIELD

This application relates to the field of terminal device technologies, and in particular, to a video duration adjustment method, an electronic device, a storage medium, and a chip.

### BACKGROUND

Cameras are disposed on many electronic devices, and a user may take a photo, a video, and the like by using a camera of an electronic device. The electronic device further has a communication function, and may also download a picture or a video from the Internet or obtain a picture or a video sent by another electronic device. The user may edit a picture and/or a video stored in the electronic device to edit a selected picture and/or video into a video.

Currently, the user may select one or more media materials (pictures and videos) from a gallery application, and then a video is automatically generated based on the selected one or more media materials by using the gallery application. However, duration of the automatically generated video usually does not meet an expectation of the user. The user needs to re-edit the video by using a video editing function (for example, video segmentation and video combination) provided by the electronic device. This causes a cumbersome manner of obtaining the video, low efficiency, and poor user experience.

### SUMMARY

This application provides a video duration adjustment method, an electronic device, a storage medium, and a chip, and can efficiently adjust duration of a generated video and improve user experience.

To achieve the foregoing objective, the following technical solutions are used in a first aspect of this application.

A first aspect of this application provides a video duration adjustment method, including:
receiving a first voice instruction, where the first voice instruction carries a first keyword;
displaying a cover of a first video on a first interface in response to the first voice instruction, where the first video is generated by using media materials, in an electronic device, related to the first keyword, and duration of the first video is first duration;
receiving a second voice instruction for adjusting the duration of the first video; and
displaying a cover of a second video on the first interface in response to the second voice instruction, where duration of the second video is second duration, and content of the second video is related to content of the first video, for example, the second video includes a part or all of the content of the first video.

In this application, based on a voice instruction of a user, the first video is automatically generated based on the media materials, in the electronic device, related to the keyword in the voice instruction, and the video is generated in a convenient and fast manner. When the user is not satisfied with the duration of the generated first video, the user may further adjust the duration of the generated first video by using the voice instruction. The electronic device automatically adjusts the duration of the first video based on the voice instruction for adjusting the duration of the first video to obtain the second video. Certainly, the second video is adjusted based on the first video. Therefore, the second video includes a part or all of the content of the first video. It may be understood that a manner of adjusting duration of a video is also simple and efficient. Therefore, user experience can be improved.

In another implementation of the first aspect of this application, before the displaying a cover of a second video on the first interface, the method further includes:
obtaining calculated duration of the second video based on the second voice instruction; and adjusting the content of the first video based on the calculated duration of the second video to obtain the second video.

In this application, the voice instruction of the user may be classified into a plurality of types, for example, extending by t1 seconds, shortening by t1 seconds, adjusting to t2 seconds, adjusting to more than t3 seconds, or adjusting to less than t3 seconds. Therefore, the calculated duration of the second video is obtained based on the second voice instruction, and then adjustment is performed.

In another implementation of the first aspect of this application, the obtaining calculated duration of the second video based on the second voice instruction includes:
obtaining expected change duration between the second video and the first video based on the second voice instruction, where the expected change duration is determined based on duration indicated by the second voice instruction;
obtaining a duration change constraint condition;
obtaining a duration change value based on the expected change duration and the duration change constraint condition; and
obtaining the calculated duration of the second video based on the first duration of the first video and the duration change value.

In this application, because the first video is an automatically generated video, the first duration of the first video is related to content and a quantity of media materials corresponding to the first voice instruction of the user, that is, for the video generated by using the media materials obtained based on the first voice instruction, the first duration is relatively reasonable duration. Therefore, to ensure video production effect, some duration change constraint conditions are set, duration cannot change too much from the duration of the first video, and duration cannot change too little from the duration of the first video. Therefore, the duration change constraint condition is set, so that the duration of the second video is more reasonable, and video production effect of the second video is better.

In another implementation of the first aspect of this application, the obtaining expected change duration between the second video and the first video based on the second voice instruction includes:
when the second voice instruction indicates to extend or shorten the first video by third duration, the expected change duration is the third duration;
when the second voice instruction indicates to change the duration of the first video to fourth duration, the expected change duration is a difference between the fourth duration and the first duration; or
when the second voice instruction indicates to change the duration of the first video to be greater than or less than fifth duration, the expected change duration is a difference between the fifth duration and the first duration.

In this application, the voice instruction of the user may be classified into a plurality of types, for example, extending by t1 seconds, shortening by t1 seconds, adjusting to t2 seconds, adjusting to more than t3 seconds, or adjusting to less than t3 seconds. Regardless of a type, the expected change duration, that is, adjusted duration expected by the user, between the second video and the first video needs to be obtained. Subsequently, the calculated duration of the second video is obtained based on the adjusted duration, expected by the user, that is used as a reference.

In another implementation of the first aspect of this application, the obtaining a duration change constraint condition includes:
calculating a first duration change constraint condition, where the first duration change constraint condition is: A first minimum value of a duration change is 0, a first maximum value of the duration change is a first percentage of expected duration of the second video, and the expected duration of the second video is determined based on the duration indicated in the second voice instruction;
obtaining a second duration change constraint condition, where a second maximum value and a second minimum value of the duration change are set in the second duration change constraint condition; and
obtaining the duration change constraint condition based on the first duration change constraint condition and/or the second duration change constraint condition.

In this application, in consideration of video production effect, it is set that a duration change between duration of a new video and duration of an original video is controlled to be within a specific percentage of expected duration of the new video. Certainly, the expected duration of the user may be relatively unrealistic. Therefore, the second duration change constraint condition is further set, and the video production effect of the second video is ensured again by using an upper limit and a lower limit.

In another implementation of the first aspect of this application, the obtaining a duration change constraint condition based on the first duration change constraint condition and/or the second duration change constraint condition includes:
when the first maximum value is less than the second minimum value, the duration change constraint condition is that the duration change value is the second minimum value;
when the first maximum value is greater than the second maximum value, the duration change constraint condition is the second duration change constraint condition; or
when the first maximum value is greater than or equal to the second minimum value and is less than or equal to the second maximum value, the duration change constraint condition is that a minimum value of the duration change is the second minimum value, and a maximum value of the duration change is the first maximum value.

In this application, an intersection of two constraint conditions is used as a final duration change constraint condition. However, during actual application, two constraint conditions may not have an intersection. For example, when a specific percentage of expected duration is less than a lower limit of another constraint condition, in this case, both a maximum value and a minimum value of a duration change range are set to be the lower limit, so that it is ensured that duration of each adjustment cannot be too short or, certainly, too long.

In another implementation of the first aspect of this application, the obtaining a duration change value based on the expected change duration and the duration change constraint condition includes:
when the expected change duration falls within a range of the duration change constraint condition, the duration change value is the expected change duration;
when the expected change duration is less than a minimum value in the duration change constraint condition, the duration change value is the minimum value in the duration change constraint condition; or
when the expected change duration is greater than a maximum value in the duration change constraint condition, the duration change value is the maximum value in the duration change constraint condition.

In another implementation of the first aspect of this application, the obtaining the calculated duration of the second video based on the first duration of the first video and the duration change value includes:
when the expected duration of the second video is greater than the first duration of the first video, the calculated duration of the second video is a sum of the first duration of the first video and the duration change value; or
when the expected duration of the second video is less than the first duration of the first video, the calculated duration of the second video is a difference between the first duration of the first video and the duration change value.

In another implementation of the first aspect of this application, before the adjusting the content of the first video based on the calculated duration of the second video to obtain the second video, the method further includes:
determining whether the calculated duration of the second video falls within a first range;
if the calculated duration of the second video is less than a minimum value of the first range, updating the calculated duration of the second video to the minimum value of the first range; or
if the calculated duration of the second video is greater than a maximum value of the first range, updating the calculated duration of the second video to the maximum value of the first range; and
adjusting the content of the first video based on the calculated duration of the second video to obtain the second video.

In this application, the obtained calculated duration of the second video may still be unreasonable. Therefore, in this embodiment of this application, the duration of the second video further needs to be constrained by using the first range, to ensure final video production effect, and to make a final second video within the first range as far as possible.

In another implementation of the first aspect of this application, the first video includes one or more sub-segments, each sub-segment corresponds to one parent segment, and each sub-segment is obtained through clipping from the corresponding parent segment.

The minimum value of the first range is preset minimum video production duration, the maximum value of the first range is a minimum value in a first value and preset maximum video production duration, and the first value is a sum of duration of parent segments in which sub-segments in the first video are located.

In another implementation of the first aspect of this application, before the displaying a cover of a first video on a first interface, the method further includes:
obtaining, from the electronic device, the media materials related to the first keyword;
obtaining each corresponding parent segment from each media material; and
clipping, based on the preset minimum video production duration and the preset maximum video production duration, a sub-segment from each obtained parent segment to generate the first video, where the duration of the first video is greater than or equal to the minimum video production duration and is greater than or equal to the maximum video production duration.

In another implementation of the first aspect of this application, the first video includes a first quantity of sub-segments.

The adjusting the content of the first video based on the calculated duration of the second video to obtain the second video includes:
obtaining a first difference based on the calculated duration of the second video and the first duration;
obtaining theoretical average change duration of each sub-segment in the first video based on the first difference and the first quantity;
determining, for a first sub-segment, whether theoretical duration of the first sub-segment falls within a sub-segment duration interval, where the first sub-segment is any sub-segment in the first video, the theoretical duration of the first sub-segment is a sum of original duration of the first sub-segment, theoretical average change duration, and a difference of a previous sub-segment, and the difference of the previous sub-segment is a difference between theoretical duration of the previous sub-segment and actual duration of the previous sub-segment;
if the theoretical duration of the first sub-segment falls within the sub-segment duration interval, actual duration of the first sub-segment is the theoretical duration of the first sub-segment;
if the theoretical duration of the first sub-segment is less than a minimum value of the sub-segment duration interval, actual duration of the first sub-segment is the minimum value of the sub-segment duration interval; or
if the theoretical duration of the first sub-segment is greater than a maximum value of the sub-segment duration interval, actual duration of the first sub-segment is the maximum value of the sub-segment duration interval;
obtaining a difference of the first sub-segment based on the theoretical duration of the first sub-segment and the actual duration of the first sub-segment; and
after actual duration of each sub-segment in the first video is obtained, using the actual duration of each sub-segment as duration of each sub-segment in the first video to obtain the second video, where the second duration of the second video is a sum of the actual duration of each sub-segment.

In this application, the duration of each sub-segment in the first video is averagely changed to ensure the video production effect of the second video. To make the duration of the second video as accurate as possible, when there is a difference between actual duration and theoretical duration of a sub-segment, the difference is rolled over to a next segment, so that the next segment compensates for the difference. Therefore, finally obtained duration of the second video is closer to the calculated duration of the second video.

In another implementation of the first aspect of this application, each sub-segment in the first video corresponds to one parent segment, each sub-segment is obtained through clipping from a corresponding parent segment, and the using the actual duration of each sub-segment as duration of each sub-segment in the first video includes:
adjusting, for the first sub-segment, a start time and/or an end time of the first sub-segment in a first parent segment to obtain a first sub-segment after duration adjustment, where the first parent segment is a parent segment in which the first sub-segment is located, and a difference between an adjusted end time and an adjusted start time of the first sub-segment is the actual duration of the first sub-segment.

In another implementation of the first aspect of this application, when the second voice instruction is to adjust the duration of the first video to be less than sixth duration, before the obtaining calculated duration of the second video based on the second voice instruction, the method further includes:
determining that the first duration is greater than the sixth duration; or
when the second voice instruction is to adjust the duration of the first video to be greater than sixth duration, before the obtaining calculated duration of the second video based on the second voice instruction, the method further includes:
   determining that the first duration is less than the sixth duration.

In this application, the duration of the first video itself may meet the expected duration corresponding to the voice instruction given by the user. In this case, the duration of the first video is no longer adjusted. When the duration of the first video does not meet the expected duration corresponding to the voice instruction given by the user, the duration of the first video is adjusted to obtain the second video.

According to a second aspect, an electronic device is provided, and includes a processor. The processor is configured to invoke a computer program stored in a memory, to implement the method according to any one of the implementations of the first aspect of this application.

According to a third aspect, a chip is provided, and includes a processor. The processor is coupled to a memory, and the processor executes a computer program stored in the memory, to enable the electronic device to implement the method according to any one of the implementations of the first aspect of this application.

According to a fourth aspect, a computer-readable storage medium is provided, and the computer readable storage medium stores a computer program. When computer instructions are run on an electronic device, the electronic device is enabled to implement the method according to any one of the implementations of the first aspect of this application.

According to a fifth aspect, an embodiment of this application provides a computer program product. When the computer program product runs on a device, the electronic device is enabled to perform the method according to any one of the implementations of the first aspect of this application.

It may be understood that for beneficial effect of the second aspect to the fifth aspect, reference may be made to related descriptions in the first aspect, and details are not described herein again.

### BRIEF DESCRIPTION OF DRAWINGS

FIG. 1 is a diagram of a hardware structure of an electronic device according to an embodiment of this application;
FIG. 2A and FIG. 2B are diagrams of an interface for generating a video by using a voice assistant according to an embodiment of this application;
FIG. 3 is a diagram of an interface for adjusting video duration by using a voice assistant according to an embodiment of this application;
FIG. 4 is a diagram of another interface for adjusting video duration by using a voice assistant according to an embodiment of this application;
FIG. 5 is a diagram of another interface for adjusting video duration by using a voice assistant according to an embodiment of this application;
FIG. 6 is a diagram of another interface for adjusting video duration by using a voice assistant according to an embodiment of this application;
FIG. 7 is a schematic flowchart of shortening or extending an original video by t1 seconds according to an embodiment of this application;
FIG. 8 is a schematic flowchart of adjusting an original video to about t2 seconds according to an embodiment of this application;
FIG. 9 is a schematic flowchart of adjusting an original video to be longer than or shorter than t3 seconds according to an embodiment of this application;
FIG. 10 is a schematic flowchart of calculating new duration of each segment based on duration of a new video according to an embodiment of this application;
FIG. 11A and FIG. 11B are a sequence diagram of generating a video by using a voice assistant according to an embodiment of this application; and
FIG. 12A and FIG. 12B are a sequence diagram of adjusting video duration by using a voice assistant according to an embodiment of this application.

### DETAILED DESCRIPTION OF EMBODIMENTS

In the following description, for description rather than limitation, specific details such as a particular system structure and a particular technology are proposed to facilitate thorough understanding of embodiments of this application. However, a person skilled in the art should understand that this application may also be implemented in another embodiment without these specific details.

It should be understood that, when used in this specification and the appended claims of this application, the term "include" indicates presence of the described feature, entirety, step, operation, element, and/or component, but does not exclude presence or addition of one or more other features, entireties, steps, operations, elements, components, and/or sets thereof.

It should be further understood that in embodiments of this application, "one or more" means one, two, or more than two, and "and/or" describes an association relationship between associated objects and indicates that three relationships may exist. For example, A and/or B may indicate the following cases: Only A exists, both A and B exist, and only B exists, where A and B may be singular or plural. The character "/" generally indicates an "or" relationship between associated objects.

In addition, in descriptions of this specification and the appended claims of this application, the terms such as "first", "second", "third", and "fourth" are used only for distinguishing between descriptions, but cannot be understood as indication or implication of relative importance.

Reference to "one embodiment", "some embodiments", or the like described in this specification of this application means that a specific characteristic, structure, or feature described with reference to this embodiment is included in one or more embodiments of this application. Therefore, statements such as "in an embodiment", "in some embodiments", "in other embodiments", and "in some other embodiments" appearing in different parts of this specification do not necessarily refer to a same embodiment, but mean "one or more but not all embodiments", unless otherwise specially emphasized in another manner. The terms "include", "contain", "have", and their variants all mean "include but are not limited to", unless otherwise specifically emphasized in another manner.

An embodiment of this application provides a video duration adjustment method. The method may be applied to an electronic device. The electronic device may be an electronic device such as a tablet computer, a mobile phone, a wearable device, a notebook computer, an ultra-mobile personal computer (ultra-mobile personal computer, UMPC), a netbook, or a personal digital assistant (personal digital assistant, PDA). A specific type of the electronic device is not limited in embodiments of this application.

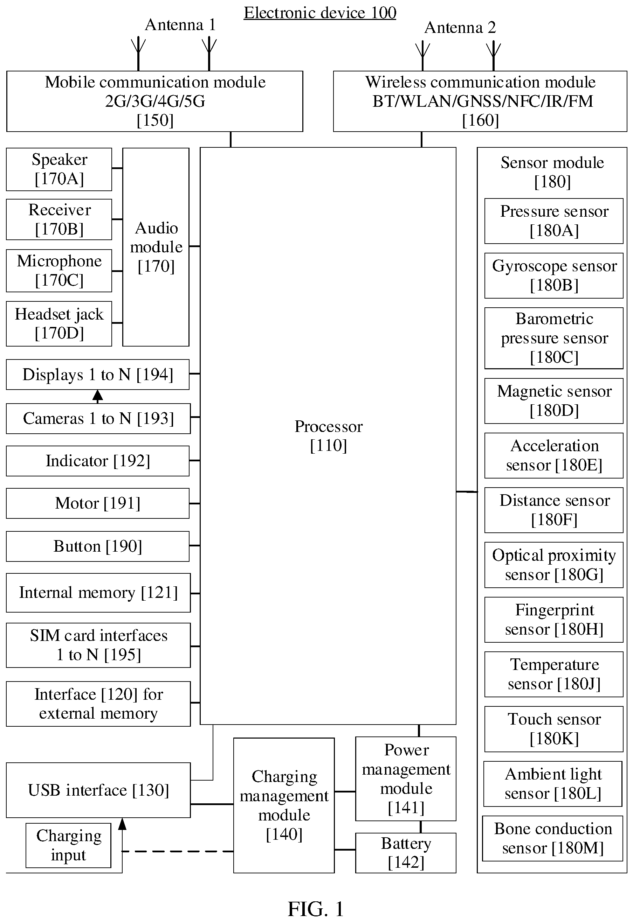

FIG. 1 shows a diagram of a structure of an electronic device. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that a structure shown in this embodiment of this application does not constitute a specific limitation on the electronic device 100. In some other embodiments of this application, the electronic device 100 may include more or fewer components than those shown in the figure, some components may be combined, some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. For example, the processor 110 is configured to perform a frame playback method of a video in this embodiment of this application.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, and reduces waiting time of the processor 110, so that efficiency of a system is improved.

The internal memory 121 may be configured to store computer-executable program code, and the executable program code includes instructions. The processor 110 runs the instructions stored in the internal memory 121, to perform various functional applications and data processing of the electronic device 100. The internal memory 121 may include a program storage area and a data storage area. The storage program area may store an operating system and an application required by at least one function (for example, an image playback function). The touch sensor 180K is also referred to as a "touch panel". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided on the display 194. In some other embodiments, the touch sensor 180K may alternatively be disposed on a surface of the electronic device 100 at a location different from that of the display 194.

The electronic device 100 implements a display function by using the GPU, the display 194, the application processor, and the like. The GPU is a microprocessor for image processing, and is connected to the display 194 and the application processor. The GPU is configured to perform mathematical and geometric calculations for graphics rendering. The processor 110 may include one or more GPUs that execute program instructions to generate or change display information. For example, in this embodiment of this application, a process of rendering YUV data may be implemented by using the GPU.

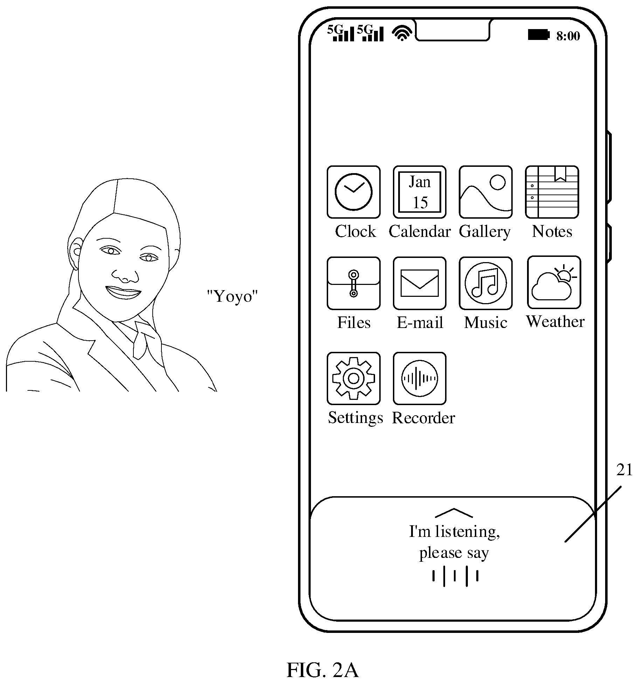

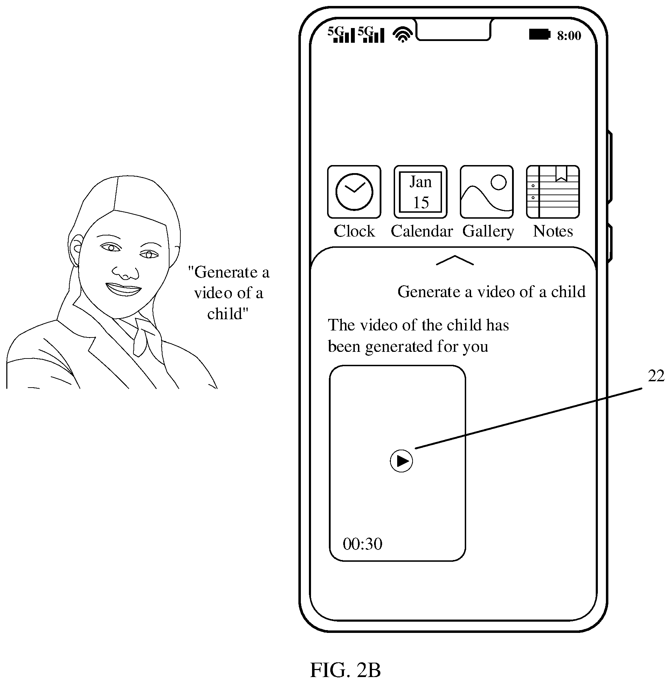

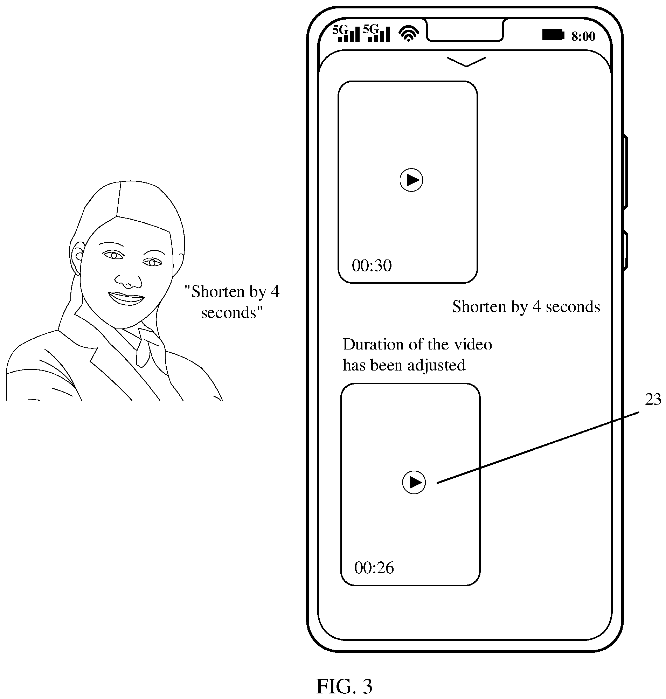

The display 194 is configured to display an image, a video, and the like. The display 194 includes a display panel. The display panel may use a liquid crystal display (liquid crystal display, LCD), an organic light-emitting diode (organic light-emitting diode, OLED), an active-matrix organic light-emitting diode or an active matrix-organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), and the like. In some embodiments, the electronic device 100 may include 1 or N displays 194, where N is a positive integer greater than 1. For example, an interface shown in FIG. 2A, FIG. 2B, or FIG. 3 in embodiments of this application is displayed on a display.

In embodiments of this application, a specific structure of an execution body of a video duration adjustment method is not particularly limited, provided that communication may be performed based on a video duration adjustment method provided in embodiments of this application by running code that records the video duration adjustment method in embodiments of this application. For example, the execution body of the video duration adjustment method provided in embodiments of this application may be a functional module, in an electronic device, that can invoke a program and execute the program, or may be a communication apparatus, for example, a chip, used in an electronic device.

Currently, cameras are disposed on many electronic devices, and a user may take a photo, a video, and the like by using a camera of an electronic device. The electronic device further has a communication function, and may also download a picture or a video from the Internet or obtain a picture or a video sent by another electronic device. The user may edit a picture and/or a video stored in the electronic device to generate a new video by using a selected picture and/or video.

As a scenario example, the user selects three videos and three pictures from a gallery application, and a new video is automatically generated based on the selected three videos and three pictures by using the gallery application.

However, during actual application, duration of the generated video may not meet an expectation of the user. As an example, some social applications allow a video up to 15 seconds to be uploaded, but duration of a video generated by using the gallery application may be 18 seconds. Some product exhibition videos require minimum duration of 45 seconds, but duration of a video generated by using the gallery application is only 42 seconds. In the foregoing case, the user may need to re-edit the generated video to meet the expectation of the user.

In addition, after statistics collection is performed on a large quantity of users, quantities of times of generating videos by using the gallery application for several consecutive months are respectively: 180319, 225494, 198392, 314070, and 262916, and an average quantity of times of generating videos by using the gallery application for each month is approximately 250000. Correspondingly, after videos are generated by using the gallery application, quantities of times the user re-edits obtained videos by using a video editing function to change video duration are respectively: 107844, 137843, 127113, 192141, and 162929, and an average quantity of times of using the video editing function to adjust the videos generated by using the gallery application for each month is approximately 150000. This means that approximately 60% of videos undergo secondary duration adjustment.

In addition, during actual investigation, it was found that some users did not perform secondary duration adjustment. This does not mean that video duration obtained for the first time meets the expectation, but a manner of secondary duration adjustment is cumbersome, and user experience is poor.

In view of this, an embodiment of this application provides a video duration adjustment method. After a video (the video is denoted as an original video) is generated, the original video may be extended or shortened by specific duration according to a user instruction to obtain a new video after duration change; according to the user instruction, a new video with specified duration may be generated based on the original video; or according to the user instruction, a new video with duration greater than or less than specified duration is obtained based on the original video.

For ease of distinguishing, the video before duration adjustment is subsequently denoted as the original video (which may be denoted as a first video), and the video after duration adjustment is denoted as the new video (which may be denoted as a second video). Duration of the first video is denoted as first duration, and duration of the second video is denoted as second duration.

The user instruction in this embodiment of this application may be a voice instruction. Therefore, in this embodiment of this application, a voice assistant provided by an electronic device or another application that has a voice function may be used. A video editing application is invoked by using the voice assistant or the another application that has a voice function, to invoke the video editing application by using the voice instruction to generate a video (denoted as the original video) by using the video editing application, and the video editing application may further be invoked by using the voice instruction to perform secondary duration adjustment on the generated original video to obtain a new video.

The following first describes a diagram of a scenario of a video duration adjustment method according to an embodiment of this application. In the diagram, a voice assistant of an electronic device is used as an example to invoke the video editing application.

FIG. 2A and FIG. 2B are diagrams of an interface for generating a video by using the voice assistant according to an embodiment of this application.

As shown in FIG. 2A, the user gives a voice "yoyo" within a voice monitoring range of the electronic device to wake up the voice assistant of the electronic device. After detecting the voice "yoyo", the electronic device sends a voice response "I'm listening, please say", and simultaneously displays an interface shown in in FIG. 2A. On the interface shown in in FIG. 2A, a voice assistant window 21 is displayed. The voice assistant window 21 includes text information "I'm listening, please say". Certainly, the voice response and the text information are intended to indicate the user that the voice assistant is woken up and ask the user to give a voice instruction. During actual application, another voice response content and text information content may alternatively be set based on a situation to provide a same reminder function.

Based on the voice response "I'm listening, please say" and/or the text information "I'm listening, please say", the user gives the voice "generate a video of a child" within the voice monitoring range of the electronic device. After detecting the voice "generate a video of a child", the electronic device displays, in the voice assistant window 21, voice information "generate a video of a child" of the user, and generates a video based on a picture and a video, stored in the electronic device, that include the child, where a material for generating the video may be a picture and/or a video in the gallery application. After the video is successfully generated, a voice "the video of the child has been generated for you" is given. At the same time, text content "The video of the child has been generated for you" and a cover of the generated video are displayed in the voice assistant window. A playback control 22 and video duration "00:30" are displayed on the cover, and the video duration "00:30" indicates that duration of the generated video is 30 seconds. During actual application, the user may tap the playback control 22 to trigger the electronic device to play the video. In this application, an example is not provided by using a diagram.

In a specific implementation, after detecting the voice "generate a video of a child", the electronic device may further identify "child" in a picture and/or a video stored in the electronic device. When it is identified that a plurality of different "children" are included, options of the plurality of children, for example, "son" and "daughter", may be displayed in the voice assistant window. The user selects whether to generate a video based on an identified picture and video related to "son", generate a video based on an identified picture and video related to "daughter", or generate a video based on an identified picture and video related to all children (for example, "son" and "daughter"). As an example, the user says "daughter". After detecting the voice, the electronic device displays, in the voice assistant window, a text "Select materials of the daughter for you" and screens out the materials related to "daughter" from the electronic device. The user may continue to say "generate a video". After detecting the voice, the electronic device generates the video based on the materials related to "daughter". In this application, an example is not provided by using a diagram.

In this example, voice information sent by the user to indicate video generation corresponds to a first voice instruction. The voice assistant window may be used as an example of a first interface for displaying the cover of the generated video. Certainly, a keyword "child" or "daughter" in this example is used as an example of a first keyword for obtaining media materials.

When the user is not satisfied with the duration of the video, the user may continue to give a voice to perform secondary editing on the video to regenerate a video with different duration.

As an example of adjusting the duration of the original video, refer to FIG. 3. When the electronic device displays an interface shown in FIG. 2B, the user gives a voice "shorten by 4 seconds" within the voice monitoring range of the electronic device. After detecting the voice "shorten by 4 seconds", the electronic device displays voice information "shorten by 4 seconds" of the user in the voice assistant window 21, and adjusts the duration of the original video. After the duration of the original video is successfully adjusted, a voice "duration of the video has been adjusted" is given. At the same time, text content "Duration of the video has been adjusted" and a cover of a new video are displayed in the voice assistant window. A playback control 23 and video duration "00:26" are also displayed on the cover, and the video duration "00:26" indicates that the duration of the generated new video is 26 seconds.

During actual application, the user may also tap the playback control 23 to trigger the electronic device to play the new video. In this application, an example is not provided by using a diagram.

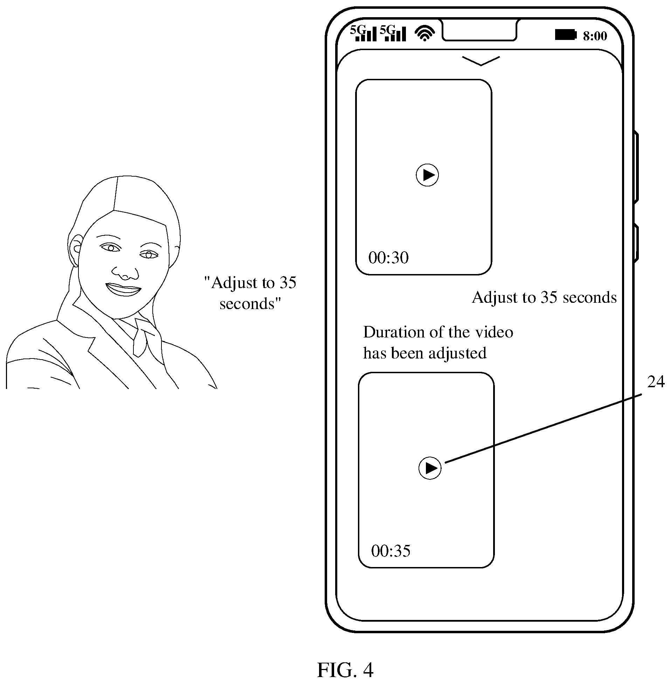

As an example of adjusting the duration of the original video, refer to FIG. 4. When the electronic device displays the interface shown in FIG. 2B, the user gives a voice "adjust to 35 seconds" within the voice monitoring range of the electronic device. After detecting the voice "adjust to 35 seconds", the electronic device displays voice information "adjust to 35 seconds" of the user in the voice assistant window 21, and adjusts the duration of the original video. After the duration of the original video is successfully adjusted, a voice "duration of the video has been adjusted" is given. At the same time, text content "Duration of the video has been adjusted" and a cover of a new video are displayed in the voice assistant window. A playback control 24 and video duration "00:35" are also displayed on the cover, and the video duration "00:35" indicates that the duration of the generated new video is 35 seconds.

During actual application, the user may also tap the playback control 24 to trigger the electronic device to play the new video. In this application, an example is not provided by using a diagram.

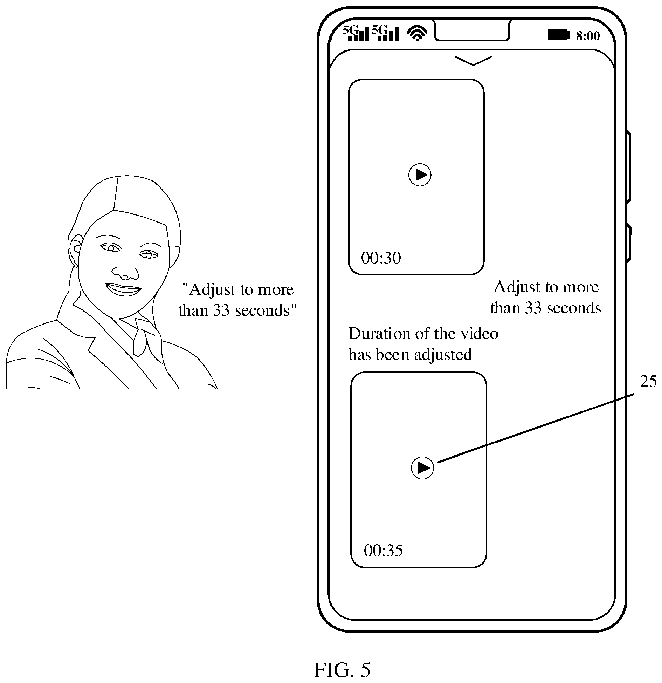

As an example of adjusting the duration of the original video, refer to FIG. 5. When the electronic device displays the interface shown in FIG. 2B, the user gives a voice "adjust to more than 33 seconds" within the voice monitoring range of the electronic device. After detecting the voice "adjust to more than 33 seconds", the electronic device displays voice information "adjust to more than 33 seconds" of the user in the voice assistant window 21, and adjusts the duration of the original video. After the duration of the original video is successfully adjusted, a voice "duration of the video has been adjusted" is given. At the same time, text content "duration of the video has been adjusted" and a cover of a new video are displayed in the voice assistant window. A playback control 25 and video duration "00:35" are also displayed on the cover, and the video duration "00:35" indicates that the duration of the generated new video is 35 seconds.

During actual application, the user may also tap the playback control 25 to trigger the electronic device to play the new video. In this application, an example is not provided by using a diagram.

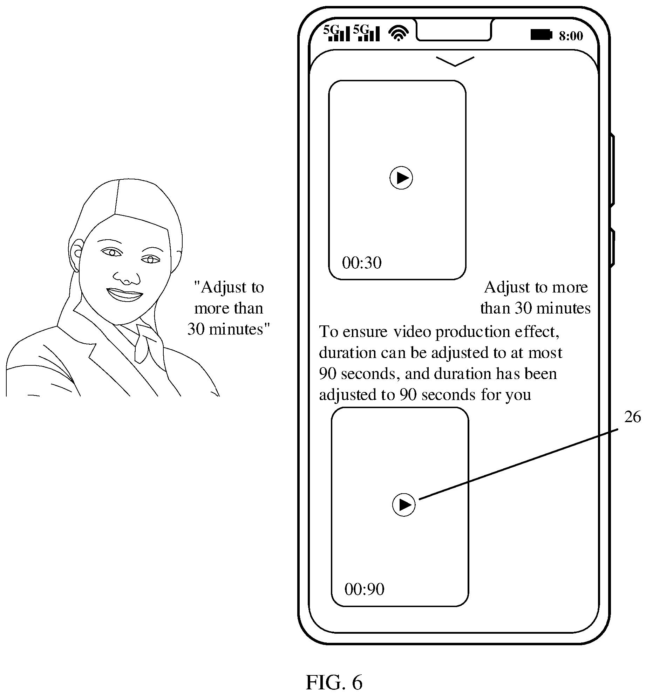

As an example of adjusting the duration of the original video, refer to FIG. 6. When the electronic device displays the interface shown in FIG. 2B, the user gives a voice "adjust to more than 30 minutes" within the voice monitoring range of the electronic device. After detecting the voice "adjust to more than 30 minutes", the electronic device displays, in the voice assistant window 21, voice information "adjust to more than 30 minutes" of the user and adjusts the duration of the original video. During actual application, a video adjustment capability of the electronic device is limited. For example, minimum duration of a new video after duration adjustment is 1 second, and maximum duration is 90 seconds. Therefore, when the electronic device determines that the video duration cannot be adjusted according to a user instruction, the electronic device may calculate video duration to which the duration can be adjusted. After the video duration (for example, 90 seconds) to which the duration can be adjusted is obtained through calculation, a voice reminder "To ensure video production effect, the duration can be adjusted to a maximum of 90 seconds, and the duration has been adjusted to 90 seconds for you" is given. At the same time, text content "To ensure video production effect, the duration can be adjusted to a maximum of 90 seconds, and the duration has been adjusted to 90 seconds for you" and a cover of a new video are displayed in the voice assistant window. A playback control 26 and video duration "00:90" are also displayed on the cover, and the video duration "00:90" indicates that duration of the generated new video is 90 seconds.

During actual application, the user may also tap the playback control 26 to trigger the electronic device to play the new video. In this application, an example is not provided by using a diagram.

In the foregoing example, voice information sent by the user to indicate video duration adjustment corresponds to a second voice instruction. The generated new video is also displayed in the voice assistant window.

In the foregoing embodiments, the user instruction is in a voice form to trigger the electronic device to adjust the duration of the original video. In another embodiment of this application, the user instruction may further be an instruction generated by the user by using adjustment manner options and adjustment duration options provided on the interface. As an example, the adjustment manner options may be set as "extend duration", "shorten duration", "adjust to specific duration", "adjust to more than specific duration", and "adjust to less than specific duration". Each adjustment manner option corresponds to a different duration option. For example, duration options may be options from 1 second to 90 seconds. In this manner, the voice assistant does not need to be involved, but an adjustment interface needs to be set. In subsequent embodiments of this application, an example in which a user instruction is a voice is used for description.

In the foregoing example, three types of duration adjustment manners are described. Type one is shortening (or extending) by t1 seconds, type two is adjusting to t2 seconds, and type three is adjusting to more than (or less than) t3 seconds. In subsequent embodiments of this application, all numbers are described in seconds. During actual application, the numbers may alternatively be in another time unit.

The following first describes a duration adjustment manner of type one (shortening (or extending) by t1 seconds). When the electronic device detects that a voice of the user includes "extend" or "shorten" and simultaneously includes time-related information, the electronic device determines that the duration adjustment manner is of type one. Certainly, "extend" and "shorten" are merely examples. During actual application, the voice may alternatively include "add", "increase", "decrease", "reduce", "shrink", or the like.

In embodiments of this application, when the new video with different duration is generated based on the original video, the new video is not regenerated by reselecting materials, but duration of each segment that forms the original video is adjusted based on the original video, so that the new video is generated based on each segment after duration adjustment.

When the user instruction is extending or shortening by t1 duration, expected duration of the user for the new video is the duration of the original video plus or minus t1. As an example, when the user instruction is extending by t1 duration, the expected duration of the new video is the duration of the original video plus t1. When the user instruction is shortening by t1 duration, the expected duration of the new video is the duration of the original video minus t1. For ease of description, in this embodiment of this application, the expected duration of the new video is denoted as dnewtotaltime.

To ensure video production effect of the new video, it is set that a duration change between the duration of the new video and the duration of the original video is controlled to be within 30% of the expected duration of the new video, that is, an error duration change is less than or equal to dnewtotaltime*30%. In this way, an excessive change in duration based on the original video, which affects video production effect of the new video, is avoided.

As an example, when the duration of the original video is 30 seconds, and extension duration t1 is 10 seconds, the expected duration of the new video dnewtotaltime is 40 seconds, and the error duration change needs to be less than or equal to dnewtotaltime*30%. That is, adjusted duration needs to be less than or equal to 12 seconds. Compared with the duration of the original video, a change range of determined duration of the new video is from 0 seconds to 12 seconds, and a range of the determined duration of the new video is from 30 seconds to 42 seconds.

In addition, to further ensure the video production effect of the new video, compared with the duration of the original video, a time change of the duration of the new video cannot be large or small without limitation. Therefore, in this embodiment of this application, it is further set that compared with the duration of the original video, the time change of the determined duration of the new video needs to be at least 3 seconds and at most 6 seconds based on the original video. That is, a capability duration change interval is [3, 6].

With reference to the foregoing two constraint conditions: a maximum value of the error duration change and the capability duration change interval, it is determined that when the duration of the original video is 30 seconds, and the extension duration t1 is 10 seconds, capability duration change is 6 seconds, and the determined duration of the new video is 36 seconds.

The following describes in detail a specific implementation process of the duration adjustment method.

In this application, extended or shortened duration is constrained by using the foregoing two constraint conditions of extension or shortening deviation, to determine specific change duration. Then, the duration of the new video may be obtained based on the duration of the original video and the change duration.

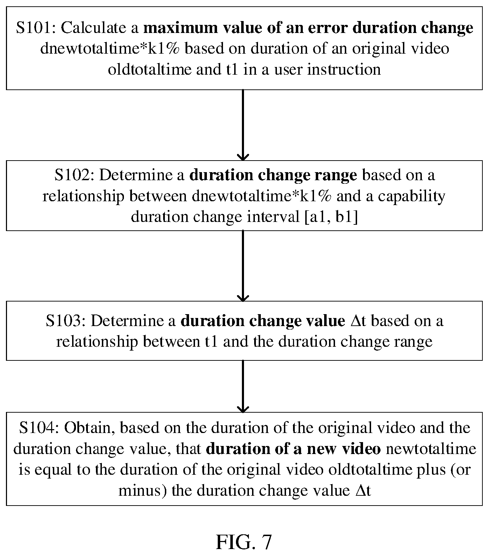

The following uses FIG. 7 to describe a schematic flowchart corresponding to a duration adjustment method corresponding to type one.

S101: Calculate a maximum value of an error duration change dnewtotaltime*k1% based on duration of an original video oldtotaltime and t1 in a user instruction.

When the instruction is extension, the maximum value of the error duration change is (oldtotaltime+t1)*k1%; when the instruction is shortening, the maximum value of the error duration change is (oldtotaltime-t1)*k1%.

S102: Determine a duration change range based on a relationship between dnewtotaltime*k1% and a capability duration change interval [a1, b1].

In this embodiment of this application, there are two duration change ranges: One is an error duration change range: from 0 to dnewtotaltime*k1%; and the other is the capability duration change interval [a1, b1].

When a final duration change range is determined, an intersection of the foregoing two duration change ranges may be calculated. However, during actual application, there may be no intersection between the two duration change ranges. For example, when dnewtotaltime*30% is less than a1 seconds, the duration change range has only one value, that is, a1 seconds. Based on the foregoing principle, the following is obtained.

If dnewtotaltime*k1% is less than a1 seconds, it is determined that the duration change range is a1 seconds.

If dnewtotaltime*k1 % is greater than b1 seconds, it is determined that the duration change is a1 to b1 seconds.

If dnewtotaltime*k1% falls within the capability duration change interval [a1, b1], it is determined that the duration change range is from a1 to dnewtotaltime*k1%.

S103: Determine a duration change value Δt based on a relationship between t1 and the duration change range.

If t1 falls within the duration change range, the duration change value Δt is t1.

If t1 is less than a minimum value of the duration change range, the duration change value Δt is the minimum value of the duration change range.

If t1 is greater than a maximum value of the duration change range, the duration change value Δt is the maximum value of the duration change range.

S104: Obtain duration of a new video newtotaltime based on the duration of the original video and the duration change value.

Similarly, when the instruction is extension, newtotaltime=oldtotaltime+Δt. When the instruction is shortening, newtotaltime=oldtotaltime-Δt.

In the foregoing example, that k1% in the error duration change is 30% is merely an example. During actual application, k1% may be set to another value, for example, 25% or 35%. a1 and b1 in the capability duration change interval are also merely an example. During actual application, a1 may be 1, 2, 4, 5, or the like, and b1 may be 8, 10, 15, or the like. To make a specific calculation process clearer, refer to a plurality of examples described in Table 1.

**Table 1 Process of obtaining duration of a new video.**

| Duration of an original video | Required change duration t1 | Maximum value of an error duration change dnewtotaltime*30% (second) | Capability duration change interval (second) | Duration change range (second) | Calculate duration of a new video (second) | User-expected duration of a new video (second) |
|---|---|---|---|---|---|---|
| 30 seconds | Extend by 2 seconds | 9.6 | [3, 6] | [3, 6] | 30+3=33 | 32 |
| 30 seconds | Extend by 12 seconds | 12.6 | [3, 6] | [3, 6] | 30+6=36 | 42 |
| 30 seconds | Extend by 25 seconds | 16.5 | [3, 6] | [3, 6] | 30+6=36 | 36 |
| 30 seconds | Shorten by 2 seconds | 8.4 | [3, 6] | [3, 6] | 30-3=27 | 28 |
| 30 seconds | Shorten by 12 seconds | 5.4 | [3, 6] | [3, 5.4] | 30-5.4=24.6 | 18 |
| 30 seconds | Shorten by 25 seconds | 1.5 | [3, 6] | 3 | 30-3=27 | 5 |

During actual application, the maximum value of the error duration change oldtotaltime*30% may also be calculated based on the duration of the original video oldtotaltime. Table 2 shows a process of using oldtotaltime*30% as the maximum value of the error change duration to obtain the duration of the new video.

**Table 2 Process of using oldtotaltime*30 % as a maximum value of error change duration to obtain duration of a new video**

| Duration of an original video | Required change duration t1 | Maximum value of an error duration change=duration of an original video *30% (second) | Capability duration change interval (second) | Duration change range (second) | Calculate duration of a new video (second) | User-expected duration of a new video (second) |
|---|---|---|---|---|---|---|
| 30 seconds | Extend by 2 seconds | 9 | [3, 6] | [3, 6] | 30+3=33 | 32 |
| 30 seconds | Extend by 12 seconds | 9 | [3, 6] | [3, 6] | 30+6=36 | 42 |
| 30 seconds | Extend by 25 seconds | 9 | [3, 6] | [3, 6] | 30+6=36 | 36 |
| 30 seconds | Shorten by 2 seconds | 9 | [3, 6] | [3, 6] | 30-3=27 | 28 |
| 30 seconds | Shorten by 12 seconds | 9 | [3, 6] | [3, 6] | 30-6=24 | 18 |
| 30 seconds | Shorten by 25 seconds | 9 | [3, 6] | [3, 6] | 30-6=24 | 5 |

The following describes a duration adjustment manner of type two (adjusting to t2 seconds). When the electronic device detects that a voice of the user includes "adjust to" and simultaneously includes time-related information, the electronic device determines that the duration adjustment manner is of type two. Certainly, "adjust to" is merely an example. During actual application, the voice may alternatively include "change to", "vary to", "extend to", "shorten to", "increase to", "decrease to", "around", or the like.

In embodiments of this application, when the new video with different duration is generated based on the original video, the new video is not regenerated by reselecting the materials, but duration of each segment that forms the original video is adjusted based on the original video, so that the new video is generated based on each segment after duration adjustment, and therefore, duration of the generated new video is as close to t2 as possible.

To ensure video production effect of the new video, it is set that the duration change between the duration of the new video and the duration of the original video is controlled to be within 15% of duration t2 in the user instruction, that is, the error duration change is less than or equal to t2*15%. In this way, an excessive change in duration based on the original video, which affects video production effect of the new video, is avoided.

As an example, when the duration t2 is 30 seconds, the error duration change is less than or equal to 4.5 seconds, and a duration change range of the new video is from 25.5 seconds to 34.5 seconds. When the duration t2 is 32 seconds, the error duration change is less than or equal to 4.8 seconds, and the duration change range of the new video is from 25.2 seconds to 34.8 seconds.

In addition, to further ensure the video production effect of the new video, compared with the duration of the original video, a time change of the duration of the new video cannot be large or small without limitation. Therefore, in this embodiment of this application, it is further set that compared with the duration of the original video, the time change of the determined duration of the new video needs to be at least 3 seconds and at most 10 seconds based on the original video. That is, the capability duration change interval is [3, 10].

In this application, the change duration is constrained by using the foregoing two duration change constraint conditions, to determine specific change duration. Then, the duration of the new video may be obtained based on the duration of the original video and the change duration.

The following describes in detail a specific implementation process of the duration adjustment method.

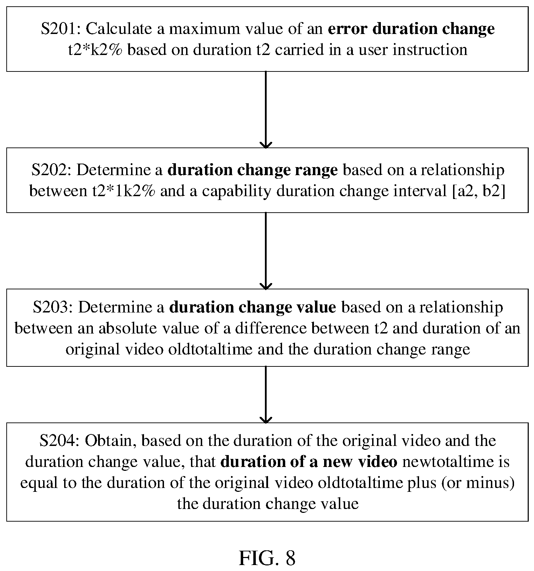

The following uses FIG. 8 to describe a schematic flowchart corresponding to a duration adjustment method corresponding to type two.

S201: Calculate a maximum value of an error duration change t2*k2% based on duration t2 carried in a user instruction.

S202: Determine a duration change range based on a relationship between t2*k2% and a capability duration change interval [a2, b2].

If t2*k2% is less than a2 seconds, it is determined that the duration change range is a2 seconds.

If t2*k2% is greater than b2 seconds, it is determined that the duration change is a2 to b2 seconds.

If t2*k2% falls within the capability duration change interval [a2, b2], it is determined that the duration change range is from a2 to t2*k2%.

S203: Determine a duration change value Δt based on a relationship between an absolute value of a difference between t2 and duration of an original video oldtotaltime and the duration change range.

If |t2-oldtotaltime| falls within the duration change range, the duration change value Δt is |t2-oldtotaltime|.

If |t2-oldtotaltime| is less than a minimum value of the duration change range, the duration change value Δt is the minimum value of the duration change range.

If |t2-oldtotaltime| is greater than a maximum value of the duration change range, the duration change value Δt is the maximum value of the duration change range.

S204: Obtain duration of a new video newtotaltime based on the duration of the original video and the duration change value.

When t2-oldtotaltime is greater than 0, newtotaltime=oldtotaltime+Δt.

When t2-oldtotaltime is less than 0, newtotaltime=oldtotaltime-Δt.

In the foregoing example, that k2% in the error duration change is 15% is merely an example. During actual application, k2% may be set to another value, for example, 20%, 25%, 30%, or 35%. a2 and b2 in the capability duration change interval are also merely an example. During actual application, a2 may be 1, 2, 4, 5, or the like, and b2 may be 6, 8, 12, 15, or the like. To make a specific calculation process clearer, refer to a process of calculating the duration of the new video shown in Table 3.

**Table 3 Process of calculating duration of a new video**

| Duration of an original video | Required video duration t2 | Required change duration (second) | Maximum value of an error duration change t2*15% (second) | Capability duration change interval (second) | Duration change range (second) | Duration of a new video (second) |
|---|---|---|---|---|---|---|
| 30 seconds | 32 seconds | 2 | 4.8 | [3, 10] | [3, 4.8] | 30+3=33 |
| 30 seconds | 34 seconds | 4 | 5.1 | [3, 10] | [3, 5.1] | 30+4=34 |
| 30 seconds | 60 seconds | 30 | 9 | [3, 10] | [3, 9] | 30+9=39 |
| 30 seconds | 28 seconds | 2 | 4.2 | [3, 10] | [3, 4.2] | 30-3=27 |
| 30 seconds | 26 seconds | 4 | 3.9 | [3, 10] | [3, 3.9] | 30-3.9=26.1 |
| 30 seconds | 15 seconds | 15 | 2.25 | [3, 10] | 3 | 30-3=27 |

During actual application, a maximum value of the duration change oldtotaltime*15% may also be calculated based on the duration of the original video oldtotaltime. Table 4 shows a process of using oldtotaltime*15% as the maximum value of the error change duration to obtain the duration of the new video.

**Table 4 Process of using oldtotaltime*15% as a maximum value of error change duration to obtain duration of a new video**

| Duration of an original video | Required video duration t2 | Required change duration (second) | Maximum value of an error duration change=duration of an original video *15% (second) | Capability duration change interval (second) | Duration change range (second) | Duration of a new video (second) |
|---|---|---|---|---|---|---|
| 30 seconds | 32 seconds | 2 | 4.5 | [3, 10] | [3, 4.5] | 30+3=33 |
| 30 seconds | 34 seconds | 4 | 4.5 | [3, 10] | [3, 4.5] | 30+4=34 |
| 30 seconds | 60 seconds | 30 | 4.5 | [3, 10] | [3, 4.5] | 30+4.5=34.5 |
| 30 seconds | 28 seconds | 2 | 4.5 | [3, 10] | [3, 4.5] | 30-3=27 |
| 30 seconds | 26 seconds | 4 | 4.5 | [3, 10] | [3, 4.5] | 30-4=26 |
| 30 seconds | 15 seconds | 15 | 4.5 | [3, 10] | [3, 4.5] | 30-4.5=25.5 |

The following describes a duration adjustment manner of type three (adjusting to more than or less than t3 seconds). When the electronic device detects that a voice of the user includes "adjust to be" "greater than" or "adjust to be" "less than" and simultaneously includes time-related information, the electronic device determines that the duration adjustment manner is of type three. Certainly, "adjust to" is merely an example. During actual application, the voice may alternatively include "change to", "vary to", "extend to", "shorten to", "increase to", "decrease to", "around", or the like.

In embodiments of this application, when the new video with different duration is generated based on the original video, the new video is not regenerated by reselecting the materials, but duration of each segment that forms the original video is adjusted based on the original video, so that the new video is generated based on each segment after duration adjustment, and therefore, duration of the generated new video is as close to t3 as possible.

To ensure video production effect of the new video, it is set that the duration change between the duration of the new video and the duration of the original video is controlled to be within 30% of duration t3 in the user instruction, that is, the error duration change is less than or equal to t3*30%. In this way, an excessive change in duration based on the original video, which affects video production effect of the new video, is avoided.

As an example, when the duration t3 is 30 seconds, the error duration change is less than or equal to 9 seconds, and a duration change range of the new video is from 21 seconds to 39 seconds.

In addition, to further ensure the video production effect of the new video, compared with the duration of the original video, a time change of the duration of the new video cannot be large or small without limitation. Therefore, in this embodiment of this application, it is further set that compared with the duration of the original video, the time change of the determined duration of the new video needs to be at least 5 seconds and at most 15 seconds based on the original video. That is, the capability duration change interval is [5, 15].

In this application, the change duration is constrained by using the foregoing two duration change constraint conditions, to determine specific change duration. Then, the duration of the new video may be obtained based on the duration of the original video and the change duration.

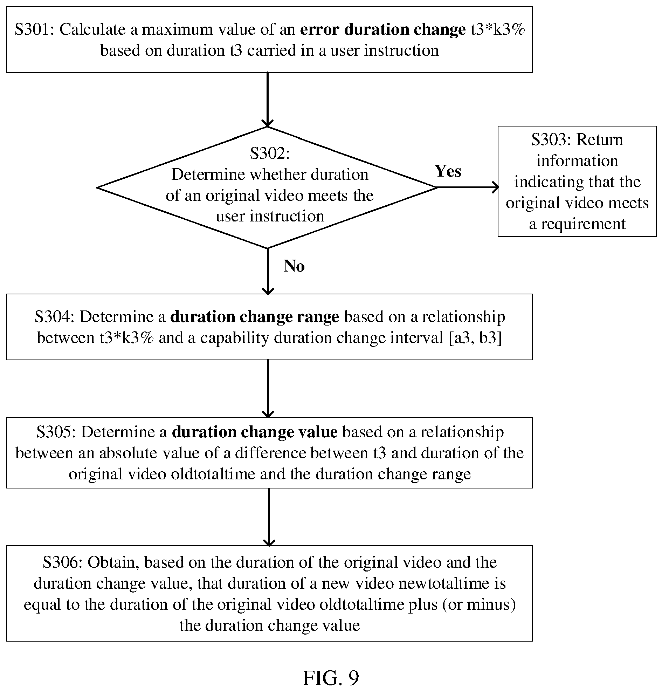

The following uses FIG. 9 to describe a schematic flowchart corresponding to a duration adjustment method corresponding to type three.

S301: Calculate a maximum value of an error duration change t3*k3% based on duration t3 carried in a user instruction.

S302: Determine whether duration of an original video meets the user instruction.

In this embodiment of this application, the user instruction may be correspondingly obtained from a voice of the user.

As an example, if the voice of the user is "adjust to more than 45 seconds", the user instruction is: greater than 45 seconds. If the voice of the user is "adjust to less than 45 seconds", the user instruction is: less than 45 seconds.

If the duration of the original video is 30 seconds, and the user instruction is: greater than 45 seconds, the duration of the original video does not meet the user instruction, and a new video needs to be generated.

If the duration of the original video is 30 seconds, and the user instruction is: less than 45 seconds, the duration of the original video meets the user instruction. In this case, no new video needs to be generated.

S303: If the duration of the original video meets the user instruction, end the process and return information, where the information indicates that the original video meets a requirement.

S304: If the duration of the original video does not meet the user instruction, determine a duration change range based on a relationship between t3*k3% and a capability duration change interval [a3, b3].

If t3*k3% is less than a3 seconds, it is determined that the duration change range is a3 seconds.

If t3*k3% is greater than b3 seconds, it is determined that the duration change is a3 to b3 seconds.

If t3*k3% falls within the capability duration change interval [a3, b3], it is determined that the duration change range is from a3 to t3*k3%.

S305: Determine a duration change value Δt based on a relationship between an absolute value of a difference between t3 and the duration of the original video oldtotaltime and the duration change range.

If |t3-oldtotaltime| falls within the duration change range, the duration change value Δt is |t3-oldtotaltime|.

If |t3-oldtotaltime| is less than a minimum value of the duration change range, the duration change value Δt is the minimum value of the duration change range.

If |t3-oldtotaltime| is greater than a maximum value of the duration change range, the duration change value Δt is the maximum value of the duration change range.

S306: Obtain duration of the new video newtotaltime based on the duration of the original video and the duration change value.

When t3-oldtotaltime is greater than 0, newtotaltime=oldtotaltime+Δt.

When t3-oldtotaltime is less than 0, newtotaltime=oldtotaltime-Δt.

In the foregoing example, k3% in the error duration change is merely an example. During actual application, k3% may be set to another value, for example, 25% or 35%. a3 and b3 in the capability duration change interval are also merely an example. During actual application, a3 may be 1, 2, 4, 5, or the like, and b3 may be 6, 8, 10, 12, 15, or the like. To make a specific calculation process clearer, refer to the a plurality of examples described in Table 5.

**Table 5 Process of obtaining duration of a new video.**

| Duration of an original video | Required video duration | Required change duration | Maximum value of an error duration change t3*30% (second) | Capability duration change interval (second) | Duration change range (second) | Calculate duration of a new video (second) |
|---|---|---|---|---|---|---|
| 30 seconds | More than 32 seconds | Extend by more than 2 seconds | 9.6 | [5, 15] | [5, 9.6] | 30+5=35 |
| 30 seconds | 34 seconds | Extend by more than 4 seconds | 10.2 | [5, 15] | [5, 10.2] | 30+5=35 |
| 30 seconds | More than 60 seconds | Extend by 30 seconds | 18 | [5, 15] | [5, 15] | 30+15=45 |
| 30 seconds | Less than 28 seconds | Shorten by more than 2 seconds | 8.4 | [5, 15] | [5, 8.4] | 30-5=25 |
| 30 seconds | Less than 26 seconds | Shorten by more than 4 seconds | 7.8 | [5, 15] | [5, 7.8] | 30-5=25 |
| 30 seconds | Less than 5 seconds | Shorten by more than 25 seconds | 1.5 | [5, 15] | 5 | 30-5=25 |

During actual application, a maximum value of the duration change oldtotaltime*30% may also be calculated based on the duration of the original video oldtotaltime. Table 6 shows a process of using oldtotaltime*30% as the maximum value of the error change duration to obtain the duration of the new video.

**Table 6 Process of using oldtotaltime*30 % as a maximum value of error change duration to obtain duration of a new video.**

| Duration of an original video | Required video duration | Required change duration | Maximum value of an error duration change t3*30% (second) | Capability duration change interval (second) | Duration change range (second) | Calculate duration of a new video (second) |
|---|---|---|---|---|---|---|
| 30 seconds | More than 32 seconds | Extend by more than 2 seconds | 9 | [5, 15] | [5, 9] | 30+5=35 |
| 30 seconds | 34 seconds | Extend by more than 4 seconds | 9 | [5, 15] | [5, 9] | 30+5=35 |
| 30 seconds | More than 60 seconds | Extend by 30 seconds | 9 | [5, 15] | [5, 9] | 30+9=39 |
| 30 seconds | Less than 28 seconds | Shorten by more than 2 seconds | 9 | [5, 15] | [5, 9] | 30-5=25 |
| 30 seconds | Less than 26 seconds | Shorten by more than 4 seconds | 9 | [5, 15] | [5, 9] | 30-5=25 |
| 30 seconds | Less than 5 seconds | Shorten by more than 25 seconds | 9 | [5, 15] | [5, 9] | 30-9=21 |

It may be understood from the foregoing three types of strategies that, regardless of the type of the strategy, the duration of the new video newtotaltime needs to be obtained through calculation based on voice information of the user and the duration of the original video. The duration may be denoted as calculated duration of the new video.

In a process of obtaining the duration of the new video newtotaltime through calculation, expected change duration between the new video and the original video needs to be first obtained based on the voice information of the user, for example, t1, |t2-oldtotaltime|, and |t3-oldtotaltime|; then, a duration change constraint condition (that is, a duration change range determined based on the two constraint conditions in the foregoing example) is obtained; then, the duration change value Δt is obtained based on the expected change duration and the duration change constraint condition; and finally, the calculated duration of the new video is obtained based on the duration of the original video and the duration change value Δt, where t1 is denoted as third duration, t2 is denoted as fourth duration, and t3 is denoted as fifth duration.

Certainly, a range of the error duration change may be denoted as a first duration change constraint condition, a first minimum value of the first duration change constraint condition is 0, and the first duration change constraint condition is a first percentage (for example, 15%, 30%, and the like in the foregoing examples) of expected duration (for example, dnewtotaltime, t2, and t3) of the user for the new video. The capability duration change interval is denoted as a second duration change constraint condition, and a second maximum value and a second minimum value in the second duration change constraint condition are preset, for example, a maximum value and a minimum value in any capability change interval in the foregoing examples.

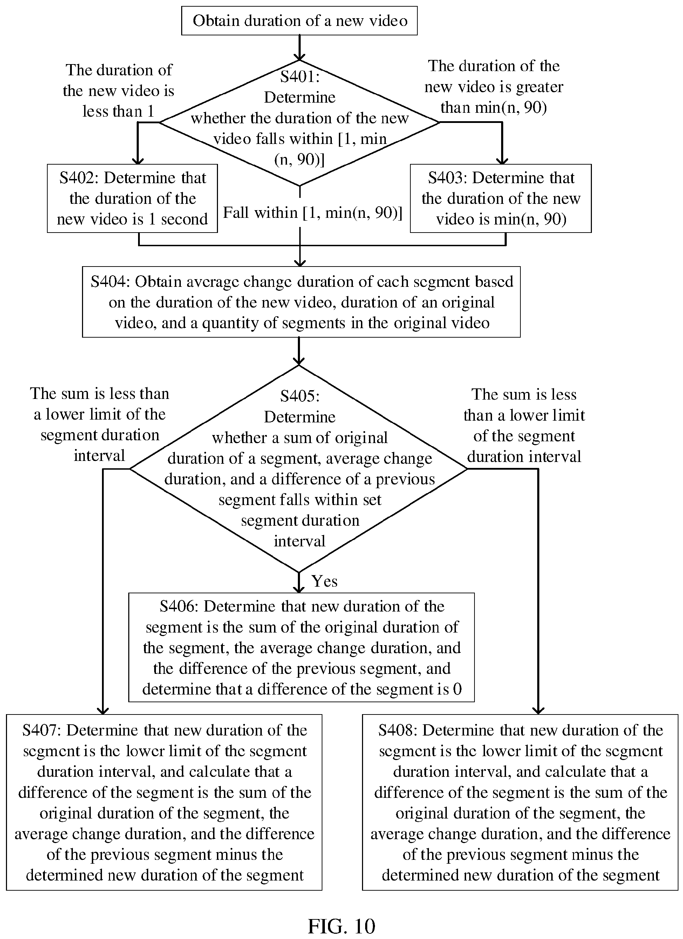

As described above, the duration of the new video may be obtained according to the manners in the foregoing embodiments. The following uses FIG. 10 to describe how to adjust duration of each segment in an original video based on duration of a new video.

S401: Determine whether the duration of the new video falls within [1, min (n, 90)], where n is maximum duration obtained based on media materials for generating the original video. [1, min (n, 90)] may be denoted as a first range.

In this embodiment of this application, when the original video is generated, the media materials for generating the original video are sliced, to obtain a plurality of highlight segments, and a part of segment in each or some of the highlight segments is clipped to generate the original video. n is a sum of duration of the plurality of obtained highlight segments.

As an example, six media materials are selected when the original video is generated. These media materials are original pictures and/or original videos, searched by the voice assistant from a gallery based on a keyword in a voice of the user, that match the keyword in the voice of the user. The media materials are analyzed to obtain a highlight segment corresponding to each media material. Duration of the six highlight segments is 2 seconds, 23 seconds, 4 seconds, 8 seconds, 23 seconds, and 1 second, respectively. When the original video is generated, first five highlight segments are used, and segments of 1 second, 11.5 seconds, 2 seconds, 4 seconds, and 11.5 seconds are respectively selected from the first five highlight segments to form the original video. Therefore, the duration of the original video is 30 seconds. n is total duration (61 seconds) of the six highlight segments or total duration (60 seconds) of the five highlight segments that generate the original video. The segments of 1 second, 11.5 seconds, 2 seconds, 4 seconds, and 11.5 seconds selected from the first five highlight segments may also be denoted as sub-segments. Each sub-segment has a corresponding highlight segment, and each sub-segment is obtained through clipping from the corresponding highlight segment. Certainly, a picture may also have a highlight segment correspondingly. For example, a video segment of specific duration is generated based on content of a picture, and the video segment is also a highlight segment.

During actual application, a value principle of n may be set based on an actual situation. Certainly, when the original video is generated, it may alternatively be set that a part or all of each highlight segment needs to be clipped to generate the original video. This is not limited in this embodiment of this application.

In addition, 1 and 90 in [1, min (n, 90)] are merely an example, and may be set to other values during actual application.

S402: If the duration of the new video is less than 1, send prompt information, determine that the duration of the new video is 1 second, and perform step S404.

S403: If the duration of the new video is greater than min (n, 90), determine that the duration of the new video is min (n, 90), and perform step S404.

For example, when min (n, 90) is 90, the original video is adjusted based on a fact that the duration of the new video is 90 seconds to obtain the new video; and when min (n, 90) is n, the original video is adjusted based on a fact that the duration of the new video is n to obtain the new video.

S404: If the duration of the new video falls within [1, min (n, 90)], obtain theoretical average change duration of each segment based on the duration of the new video, the duration of the original video, and a quantity (which may be denoted as a first quantity) of segments in the original video.

For example, the theoretical average change duration Averagetime of each segment is equal to a difference (denoted as a first difference) between the duration of the new video newtotaltime and the duration of the original video oldtotaltime divided by the quantity m of segments in the original video.

That is, Averagetime=(newtotaltime-oldtotaltime)/m.

For each segment in the original video, step S405 and subsequent steps are performed to determine new duration of each segment.

S405: For each segment (which may also be denoted as a first sub-segment), determine whether a sum of original duration of a segment oldfragmenttime (which represents duration of a sub-segment in the original video, but not represent duration of a highlight segment in which the sub-segment is located), the theoretical average change duration Averagetime, and a difference (difference) of a previous segment falls within a set segment duration interval.

That is, it is determined whether (oldfragmenttimei+Averagetimei+difference (i-1)) is in the segment duration interval.

A difference of each segment is a difference between theoretical duration of the segment and actual duration newfragmenttimei obtained through calculation, and the theoretical duration of the segment is a sum of original duration of the segment oldfragmenttime, theoretical average change duration Averagetime, and a difference of a previous sub-segment.

During actual application, for a video segment, an upper limit of duration is 12 seconds; for a picture segment, an upper limit of duration is 7 seconds; and for both the video segment and the picture segment, a lower limit of duration is 0.5 seconds. In addition, for a 1^{st} segment, a difference of a previous segment is 0.

That is, a segment duration interval of a video segment is [0.5, 12], and a segment duration interval of a video segment is [0.5, 7]. Certainly, 0.5, 7, and 12 in this example are merely examples and may also be other values during actual application. For ease of description, the segment duration interval is [a4, and b4].

S406: If the sum of the original duration of the segment, the theoretical average change duration, and the difference of the previous segment falls within the set segment duration interval, determine that new duration of the segment is the sum of the original duration of the segment, the theoretical average change duration, and the difference of the previous segment, and determine that a difference of the segment is 0.

That is, when (oldfragmenttimei+Averagetimei+difference (i-1)) falls within [a4, b4], newfragmenttimei=oldfragmenttimei+Averagetimei+difference (i-1).

S407: If the sum of the original duration of the segment, the theoretical average change duration, and the difference of the previous segment is less than a lower limit of the segment duration interval, determine that the new duration of the segment is the lower limit of the segment duration interval, and calculate that the difference of the segment is the sum of the original duration of the segment, the theoretical average change duration, and the difference of the previous segment minus the determined new duration of the segment.

That is, when (oldfragmenttimei+Averagetimei+difference (i-1)) is less than a4, newfragmenttimei=a4, and difference i=oldfragmenttimei+Averagetimei+difference (i-1)-newfragmenttimei.

S408: If the sum of the original duration of the segment, the theoretical average change duration, and the difference of the previous segment is greater than an upper limit of the segment duration interval, determine that the new duration of the segment is the upper limit of the segment duration interval, and calculate that the difference of the segment is the sum of the original duration of the segment, the theoretical average change duration, and the difference of the previous segment minus the determined new duration of the segment.

That is, when (oldfragmenttimei+Averagetimei+difference (i-1)) is greater than b4, newfragmenttimei=b4, and difference i=oldfragmenttimei+Averagetimei+difference (i-1)-newfragmenttimei.

In this manner, after new duration of each segment is obtained, content of each segment is adjusted based on the new duration of each segment, and the new video is generated based on each segment after content adjustment.

The following uses two examples to describe a process of generating the new video based on a segment of the original video after the duration of the new video is obtained through calculation.

In Table 7, the duration of the original video is 30 seconds, the duration of the new video is 35 seconds, and the duration of the original video has five segments, so that it is calculated that theoretical average extension duration of each segment is 1 second.

**Table 7 Process of calculating new duration of each segment**

| Segment | Original duration (second) | Theoretical average extension duration (second) | Difference of a previous segment (second) | New duration [0.5-12] (second) | Difference=original duration+theoretical average extension duration+difference of a previous segment-determined new duration (second) |
|---|---|---|---|---|---|
| | | | | Original duration+theoretical average extension duration+difference of a previous segment | |
| Segment 1 | 1 | 1 | 0 | 2 | 0 |
| Segment 2 | 11.5 | 1 | 0 | 12.5 is updated to 12 | 0.5 |
| Segment 3 | 2 | 1 | 0.5 | 3.5 | 0 |
| Segment 4 | 4 | 1 | 0 | 5 | 0 |
| Segment 5 | 11.5 | 1 | 0 | 12.5 is updated to 12 | 0.5 |

When new duration of the segment 1 is calculated, original duration of the segment plus theoretical average extension duration plus a difference of a previous segment is equal to 2, and it is determined that 2 falls within upper and lower limits. Therefore, the new duration is 2, and a difference is equal to the original duration of the segment plus the theoretical average extension duration plus the difference of the previous segment minus the determined new duration and is equal to 0.

When new duration of the segment 2 is calculated, original duration of the segment plus theoretical average extension duration plus a difference of a previous segment is equal to 12.5, and it is determined that 12.5 is not within the upper and lower limits and is greater than the upper limit 12. Therefore, the new duration is 12, and a difference is equal to the original duration of the segment plus the theoretical average extension duration plus the difference of the previous segment minus the determined new duration of the segment and is equal to 0.5.

When new duration of the segment 3 is calculated, original duration of the segment plus theoretical average extension duration plus a difference of a previous segment is equal to 3.5, and it is determined that 3.5 falls within the upper and lower limits. Therefore, the new duration is 3.5, and a difference is equal to the original duration of the segment plus the theoretical average extension duration plus the difference of the previous segment minus the determined new duration of the segment and is equal to 0.

When new duration of the segment 4 is calculated, original duration of the segment plus theoretical average extension duration plus a difference of a previous segment is equal to 5, and it is determined that 5 falls within the upper and lower limits. Therefore, the new duration is 5, and a difference is equal to the original duration of the segment plus the theoretical average extension duration plus the difference of the previous segment minus the determined new duration of the segment and is equal to 0.

When new duration of the segment 5 is calculated, original duration of the segment plus theoretical average extension duration plus a difference of a previous segment is equal to 12.5, and it is determined that 12.5 is not within the upper and lower limits and is greater than the upper limit 12. Therefore, the new duration is 12, and a difference is equal to the original duration of the segment plus the theoretical average extension duration plus the difference of the previous segment minus the determined new duration and is equal to 0.5.

Therefore, when original duration of a video formed by the foregoing five segments is 30 seconds, and duration of a new video obtained through calculation based on a corresponding strategy is 35 seconds, duration of a finally obtained produced new video is 34.5 seconds, and a difference is 0.5 seconds.

In Table 8, the duration of the original video is 30 seconds, the duration of the new video is 25 seconds, and the duration of the original video has five segments, so that it is calculated that theoretical average shortening duration of each segment is -1 second.

**Table 8 Process of calculating new duration of each segment**

| Segment | Original duration (second) | Theoretical average extension duration (second) | Difference of a previous segment (second) | New duration [0.5-12] (second) | Difference=original duration+theoretical average extension duration+difference of a previous segment-new duration (second) |
|---|---|---|---|---|---|
| | | | | Original duration+theoretical average extension duration+difference of a previous segment [0.5-12] | |
| Segment 1 | 1 | -1 | 0 | 0 is updated to 0.5 | -0.5 |
| Segment 2 | 11.5 | -1 | -0.5 | 10 | 0 |
| Segment 3 | 2 | -1 | 0 | 1 | 0 |
| Segment 4 | 4 | -1 | 0 | 3 | 0 |
| Segment 5 | 11.5 | -1 | 0 | 10.5 | 0 |

When average extension duration is a negative number, it represents shortening the duration of the original video.

When new duration of the segment 1 is calculated, original duration of the segment plus theoretical average extension duration plus a difference of a previous segment is equal to 0, and it is determined that 0 is not within upper and lower limits and is less than the lower limit 0.5. Therefore, the new duration of the segment is 0.5, and a difference is equal to the original duration of the segment plus the theoretical average extension duration plus the difference of the previous segment minus the determined new duration and is equal to -0.5.

When new duration of the segment 2 is calculated, original duration of the segment plus theoretical average extension duration plus a difference of a previous segment is equal to 10, and it is determined that 10 falls within the upper and lower limits. Therefore, the new duration is 10, and a difference is equal to the original duration of the segment plus the theoretical average extension duration plus the difference of the previous segment minus the determined new duration and is equal to 0.

When new duration of the segment 3 is calculated, original duration of the segment plus theoretical average extension duration plus a difference of a previous segment is equal to 1, and it is determined that 1 falls within the upper and lower limits. Therefore, the new duration is 1, and a difference is equal to the original duration of the segment plus the theoretical average extension duration plus the difference of the previous segment minus the determined new duration and is equal to 0.

When new duration of the segment 4 is calculated, original duration of the segment plus theoretical average extension duration plus a difference of a previous segment is equal to 3, and it is determined that 3 falls within the upper and lower limits. Therefore, the new duration is 3, and a difference is equal to the original duration of the segment plus the theoretical average extension duration plus the difference of the previous segment minus the determined new duration and is equal to 0.

When new duration of the segment 5 is calculated, original duration of the segment plus theoretical average extension duration plus a difference of a previous segment is equal to 10.5, and it is determined that 10.5 falls within the upper and lower limits. Therefore, the new duration is 10.5, and a difference is equal to the original duration of the segment plus the theoretical average extension duration plus the difference of the previous segment minus the determined new duration and is equal to 0.

Therefore, when original duration of a video formed by the foregoing five segments is 30 seconds, and duration of a new video obtained through calculation based on a corresponding strategy is 25 seconds, duration of a finally obtained produced new video is 25 seconds, and a difference is 0 seconds.

A manner of a cyclic rolling difference in the foregoing example is used, so that duration of each segment can be balanced. Therefore, the duration of the finally obtained produced video is closer to new duration, of the video, obtained through calculation.

It may be understood from the foregoing process of obtaining the new video that both the new video and the original video are obtained based on same media materials. Certainly, before the video is generated, a highlight segment (denoted as a parent segment) needs to be clipped from the media materials. Therefore, both the new video and the original video are generated based on a same highlight segment. A difference lies in that for the original video, a part or all of segments (which, certainly, may be denoted as sub-segments) may further be clipped from each highlight segment respectively to generate the original video; and for the new video, duration of these sub-segments is extended or shortened based on locations of these sub-segments in corresponding highlight segments, and the sub-segments whose duration is extended or shortened generate the new video. Certainly, content and duration of some sub-segments may remain unchanged in new and old videos. Based on the foregoing description, the new video includes a part or all of content in the original video, and content of the second video is related to content of the first video.

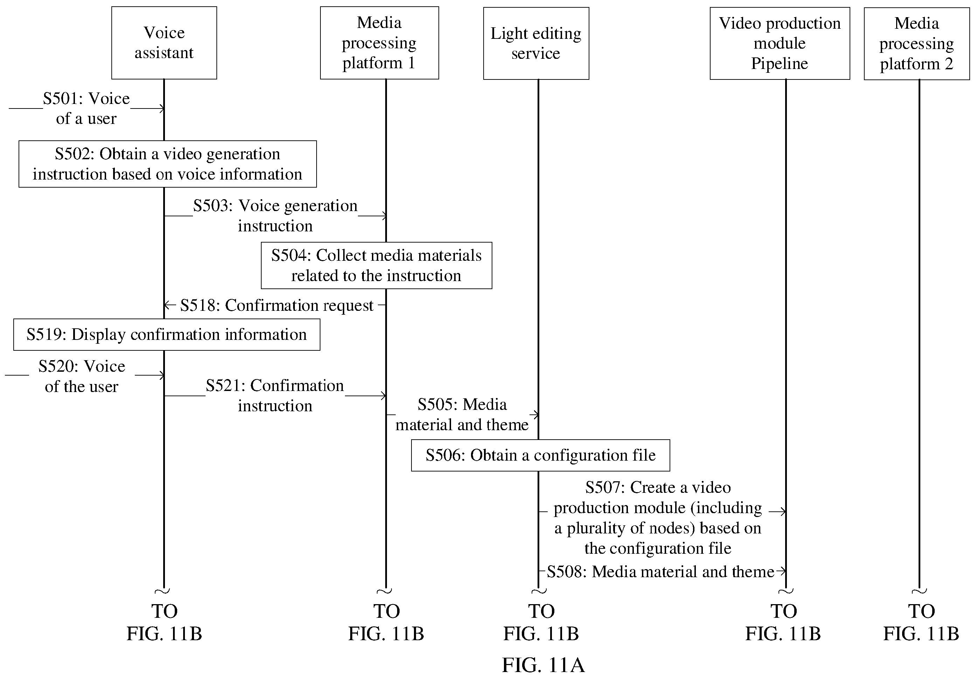

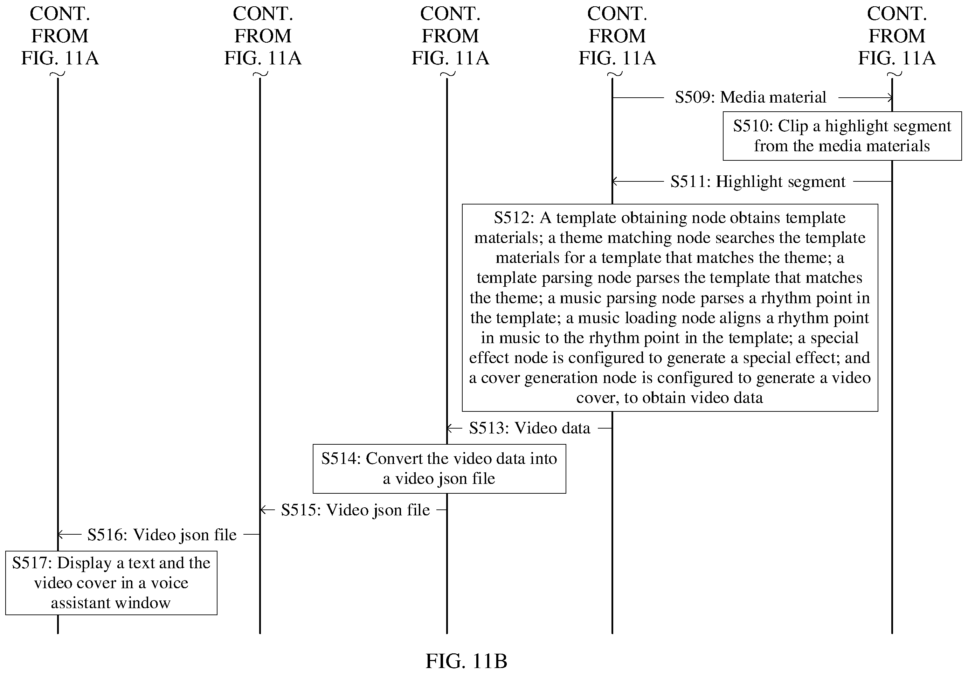

To make a performing process of steps in the foregoing flowchart clearer, the following first use FIG. 11A and FIG. 11B to describe a sequence diagram in which the electronic device generates a video related to a child after detecting a voice "generate a video of a child" of the user. The sequence diagram corresponds to FIG. 2B.

S501: A voice assistant detects a voice of the user.

In this embodiment of this application, the voice of the user may be "generate a video of a child".

S502: The voice assistant obtains a video generation instruction based on voice information corresponding to the voice of the user.

In this embodiment of this application, after detecting the voice of the user, the voice assistant may first generate text information based on the voice of the user, and then extract keywords "generate", "child", and "video" from the text information, to obtain the video generation instruction. The voice assistant may determine, based on the keyword "video", material types: "picture" and "video", and may further determine a content identifier "child" based on the keyword "child". The material types and the content identifier are carried in the video generation instruction.

Certainly, during actual application, after generating the text information based on the voice of the user, the voice assistant may display a text "generate a video of a child" in a voice assistant window.

S503: The voice assistant sends the video generation instruction to a media processing platform 1.

S504: After receiving the video generation instruction, the media processing platform 1 collects media materials related to the instruction from the electronic device.

As an example, the video generation instruction carries the material types: "picture" and "video", and further carries the content identifier "child". The media processing platform 1 determines, based on the material types: "picture" and "video", that the materials that need to be searched are pictures and videos, and determines, based on the content identifier "child", to search for a picture and a video whose content identifier is the child.

Certainly, during actual application, a level-1 content label and a level-2 content label may be set for a video and a picture. The level-2 content label of a level-1 content label "child" may include "daughter" and "son".

In addition, in the electronic device, a maximum value (for example, 30) of a quantity of media materials collected each time a video is generated may be set, that is, a maximum quantity of media materials collected when a video is generated is 30.

S505: The media processing platform 1 sends the searched media materials and a theme (the content identifier itself or the theme determined based on the content identifier) to a light editing service.

As an example, the theme may be the content identifier "child", or may be a theme "children" determined based on the content identifier "child". Certainly, a manner of determining the theme is merely an example.

The light editing service may be an example of a video editing application.

S506: After receiving the media materials and the theme, the light editing service obtains a configuration file.

In this embodiment of this application, nodes in a video production module that needs to be created are defined in the configuration file, and subsequently, a video may be generated by using the nodes in the video production module.

As an example, nodes in the configuration file include: a template obtaining node, a theme matching node, a template parsing node, a music parsing node, a music loading node, a special effect node, a cover generation node, a duration adjustment node, and the like.

The template obtaining node is configured to obtain template materials. The theme matching node is configured to search the template materials for a template that matches the theme. The template parsing node is configured to parse the template that matches the theme. The music parsing node is configured to parse a rhythm point in the template. The music loading node is configured to align a rhythm point in music to the rhythm point in the template. The special effect node is configured to generate a special effect. The cover generation node is configured to generate a video cover. The duration adjustment node is configured to calculate, during secondary video production, duration of a new video and adjust duration of each segment in an original video, to obtain the new video.

It may be understood that there is a specific processing sequence between these nodes.

S507: The light editing service creates the video production module (and the nodes in the video production module) based on the configuration file.

In this step, the duration adjustment node may not be created temporarily, and the duration adjustment node is created when video duration needs to be adjusted. Certainly, during actual application, the configuration file may alternatively be set to include no duration adjustment node.

S508: After creating the video production module, the light editing service sends the media materials and the theme to the video production module.

S509: After receiving the media materials and the theme, the video production module sends the media materials to a media processing platform 2.

In this embodiment of this application, the media processing platform 1 and the media processing platform 2 may be two media processing platforms, or may be different functional modules in a same media processing platform.

S510: After receiving the media materials, the media processing platform 2 clips a highlight segment from the media materials.

In this application, the highlight segment may be a relatively wonderful picture segment clipped by the media processing platform 2 from the media materials, and during clipping, a plurality of conditions may be used as a reference standard, for example, a composition radio and a proportion of people.

One highlight segment or a plurality of highlight segments may be clipped from each media material, or a highlight segment may be clipped from a part of the media materials. This is not limited in embodiments of this application.

S511: The media processing platform 2 sends the clipped highlight segment to the video production module.

S512: After receiving the highlight segment, the video production module obtains a model of the video by using the nodes.

Corresponding to the creased node, the template obtaining node obtains the template materials. The theme matching node searches the template materials for the template that matches the theme. The template parsing node parses the template that matches the theme. The music parsing node parses the rhythm point in the template. The music loading node aligns the rhythm point in music to the rhythm point in the template. The special effect node is configured to generate the special effect. The cover generation node is configured to generate the video cover. Data of the new video is obtained after processing of the foregoing nodes.

This process is merely an example. During actual application, different nodes or more or fewer nodes may be disposed. Regardless of which nodes are used, the video production module may obtain video data by using these nodes.

In addition, the original video also needs to be generated within an interval between preset minimum video production duration and preset maximum video production duration. When total duration of the highlight segment is greater than 90 seconds, a part of segment (the segment may also be denoted as a sub-segment) needs to be further clipped from each highlight segment to generate the original video. Similarly, when the total duration of the highlight segment is less than 1 second, the original video needs to be generated based on each highlight segment. Duration of each highlight segment is extended when the original video is generated, so that the obtained duration of the original video is as close to 1 second as possible. When the total duration of the highlight segment is greater than or equal to 1 second and is less than or equal to 90 seconds, the original video may be directly generated based on the highlight segment.

S513: The video production module sends the video data to the light editing service.

S514: After receiving the video data, the light editing service converts the video data into a video json file.

In this application, the video data is large and includes a lot of information, so that the video data can be converted into the json file with a small amount of data, to facilitate transmission.

S515: The light editing service sends the video json file to the media processing platform 1.

S516: After receiving the video json file, the media processing platform 1 sends the video json file to the voice assistant.

S517: After receiving the video json file, the voice assistant displays a text "The video of the child has been generated for you" and the video cover in the voice assistant window.

In another embodiment of this application, between step S504 and step S505, the method further includes the following steps.

S518: After collecting the media materials related to the instruction, the media processing platform 1 sends a confirmation request to the voice assistant, where the confirmation request includes a plurality of material options.

In this embodiment of this application, after detecting the voice "generate a video of a child", the electronic device may further identify "child" in a picture and/or a video stored in the electronic device. When identifying that a plurality of different "children" are included, the electronic device may send the confirmation request to the voice assistant, for example, when "son" and "daughter" are identified, the returned confirmation request carries a "son" material option and a "daughter" material option.

S519: The voice assistant displays confirmation information.

When receiving the material options, the voice assistant displays options of a plurality of children as the confirmation information, for example, the "son" material option and the "daughter" material option.

The confirmation information indicates that the user may select to generate a video based on an identified picture and video related to "son", generate a video based on an identified picture and video related to "daughter", or generate a video based on an identified picture and video related to all children (for example, "son" and "daughter").

S520: The voice assistant receives the voice of the user.

The voice of the user may be "daughter".

S521: The voice assistant sends a confirmation instruction to the media processing platform 1.

As an example, the user says "daughter", and after detecting the voice, the voice assistant sends the confirmation instruction to the media processing platform, where the confirmation instruction carries "daughter".

S505: After receiving the confirmation instruction, the media processing platform 1 sends, to the light editing service, materials related to the confirmation instruction "daughter".

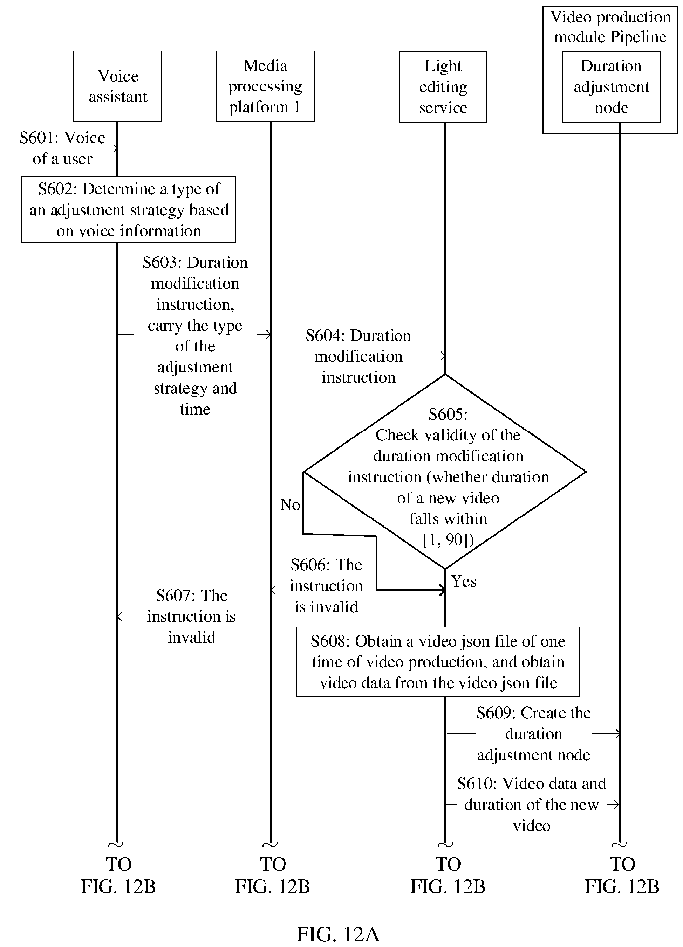

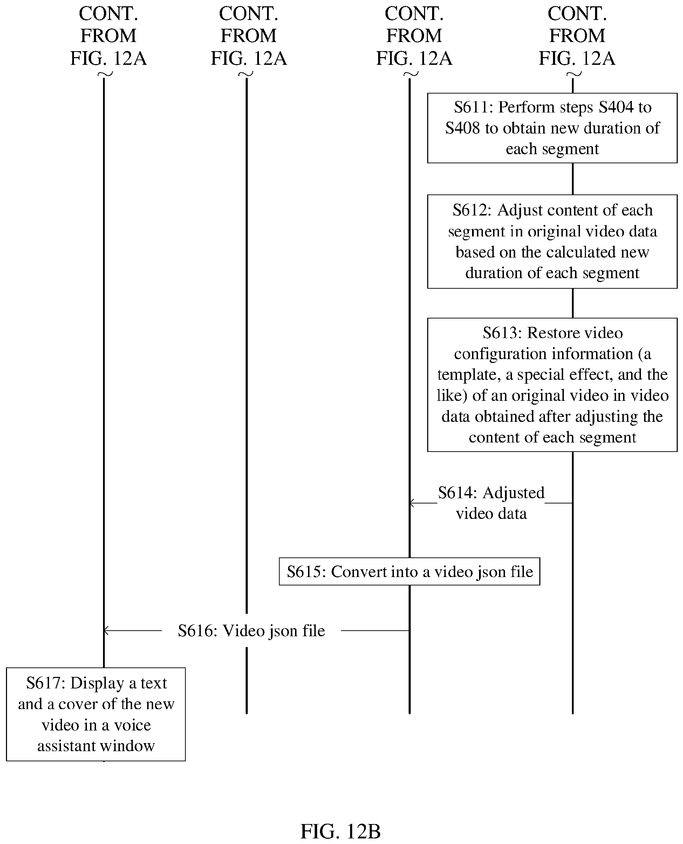

The following uses FIG. 12A and FIG. 12B to describe a sequence diagram of adjusting duration of a video when a user is not satisfied with the duration of the video generated in FIG. 11A and FIG. 11B. The sequence diagram corresponds to any interface in FIG. 3 to FIG. 6, or corresponds to any example in FIG. 7 to FIG. 9.

S601: The user sends voice information.

In this embodiment of this application, a voice of the user may be voice information corresponding to any one of the foregoing three types.

As an example, the voice information may be "adjust to 35 seconds", "extend by 5 seconds", "adjust to less than 30 seconds", or the like.

S602: The voice assistant determines a type of an adjustment strategy based on the voice information corresponding to the voice of the user.

In this embodiment of this application, after detecting the voice of the user, the voice assistant may first generate text information based on the voice of the user, and then extract a keyword in the text information, to determine the type of the adjustment strategy based on the keyword. For this process, refer to the examples in FIG. 7 to FIG. 9.

There are three types of adjustment strategy in this embodiment of this application. For details, refer to the type one, the type two, and the type three in the foregoing embodiment.

In addition, during actual application, after the text information is generated based on the voice of the user in step S602, the text information may also be displayed in the voice assistant window.

S603: The voice assistant sends a duration modification instruction to the media processing platform 1, where the instruction carries the type of the adjustment strategy and time.

For example, an identifier corresponding to the type one, an identifier corresponding to the type two, or an identifier corresponding to the type three in the foregoing example may be carried. Correspondingly, the time is t1, t2, or t3 in the foregoing embodiment.

S604: After receiving the duration modification instruction, the media processing platform 1 sends the duration modification instruction to the light editing service.

S605: After receiving the duration modification instruction, the light editing service detects validity of the duration modification instruction.

In this step, duration of a new video needs to be obtained through calculation based on the type of the adjustment strategy determined based on the duration modification instruction and the time carried in the duration modification instruction as shown in FIG. 7, FIG. 8, or FIG. 9. Then, step S401 in FIG. 10 is performed to determine validity of the duration modification instruction.

As an example, when the duration of the new video obtained through calculation falls within a range of [1, min (n, 90)], it indicates that the duration modification instruction is valid. When the duration of the new video obtained through calculation does not fall within the range of [1, min (n, 90)], it indicates that the duration modification instruction is invalid.

S606: If the duration modification instruction is invalid, the editing service sends, to the media processing platform 1, information indicating that the instruction is invalid.

S607: After receiving the information indicating that the instruction is invalid, the media processing platform 1 sends, to the voice assistant, the information indicating that the instruction is invalid.

After receiving the information indicating that the instruction is invalid, the voice assistant may display corresponding text information, for example, "To ensure video production effect, duration can be adjusted to at most 90 seconds, and duration has been adjusted to 90 seconds for you" or "To ensure video production effect, duration can be adjusted to at least 1 second, and duration has been adjusted to 1 second for you" in FIG. 6. Certainly, text information and a cover of the new video may alternatively be displayed after the new video is really obtained. This is not limited in this application.

Regardless of whether the instruction is valid, the light editing service needs to perform step 608 and a subsequent step and perform secondary video production, that is, a process of generating the new video.

S608: The light editing service obtains a video json file of previous video production, and obtains video data from the video json file.

In the video json file, media materials of previous video production (for example, a highlight segment used last time), configuration information (for example, a selected template and special effect), duration of a highlight segment in which each segment forming an original video is located, duration of each segment forming the original video, and the like are recorded. Certainly, after the video data is obtained, the video data also carries the foregoing information.

S609: The light editing service creates a duration adjustment node in a video production module.

S610: The light editing service sends, to the adjustment duration node in the video production module, the video data and the duration of the new video obtained through calculation.

S611: The duration adjustment node performs steps S404 to S408 to obtain new duration of each segment in the original video.

S612: The duration adjustment node adjusts content of each segment in original video data based on the calculated new duration of each segment.

In this embodiment of this application, if original duration of a segment 1 is 1 second and needs to be adjusted to 2 seconds, and duration of a highlight segment in which the segment 1 is located is 5 seconds, the segment 1 corresponds to a 2^{nd} second to a 3^{rd} second in the highlight segment. New duration of the segment 1 may be set to 2 seconds, and the adjusted segment 1 corresponds to the 2^{nd} second to a 4^{th} second, a 1^{st} second to the 3^{rd} second, or a 1.5^{th} second to a 3.5^{th} second in the highlight segment.

In another example, if the original duration of the segment 1 is 1 second and needs to be adjusted to 2 seconds, and the duration of the highlight segment in which the segment 1 is located is 1 second, the segment 1 corresponds to a 0^{th} second to the 1^{st} second in the highlight segment. The new duration of the segment 1 may be set to 2 seconds, and the adjusted segment 1 corresponds to the 0^{th} second to the 1^{st} second in the highlight segment, but is played at a slow speed, so that playback duration of the segment 1 is 2 seconds. Certainly, the new duration of the segment 1 may alternatively be set to 1 second of duration of the highlight segment in which the segment 1 is located, and -1 second is rolled over to a next segment as a difference. A specific implementation is not limited in this embodiment of this application.

S613: After adjusting the content of each segment, the duration adjustment node restores configuration information of the original video, such as a template and a special effect, in video data obtained after adjusting the content of the segment.

S614: After restoring the configuration information of the original video in the video data obtained after adjusting the content of the segment, the duration adjustment node sends adjusted video data to the light editing service.

S615: After receiving the adjusted video data, the light editing service converts the adjusted video data into a video json file.

S616: The light editing service sends the video json file to the voice assistant by using the media processing platform 1.

S617: After receiving the video json file, the voice assistant displays, in the voice assistant window, a text "The duration of the video has been adjusted for you" and a cover of a video whose duration is adjusted.

Certainly, in a specific implementation process, if a determining result of step S605 is invalid, in this case, displayed text is: "To ensure video production effect, duration can be adjusted to at most t (for example, 1, n, or 90) seconds, and duration has been adjusted to t (for example, 1, n, or 90) seconds for you" or "To ensure video production effect, duration can be adjusted to at least 1 second, and duration has been adjusted to 1 second for you".

It may be understood that, in this manner, duration of a generated video can be efficiently adjusted, to improve user experience.

It should be understood that sequence numbers of the steps in the foregoing embodiments do not mean execution sequences. The execution sequences of the processes should be determined based on functions and internal logic of the processes, and should not be construed as any limitation on the implementation processes of embodiments of this application.

An embodiment of this application further provides a computer-readable storage medium. The computer-readable storage medium stores a computer program. When the computer program is run on an electronic device, steps in the foregoing method embodiments may be implemented.

An embodiment of this application further provides a computer program product. When the computer program product is run on an electronic device or a wireless router, the electronic device is enabled to implement steps in the foregoing method embodiments.

When an integrated unit is implemented in a form of a software functional unit and sold or used as an independent product, the integrated unit may be stored in a computer readable storage medium. Based on such an understanding, in this application, all or some of procedures of the method in the foregoing embodiments may be implemented by a computer program instructing relevant hardware. The computer program may be stored in a computer-readable storage medium. When the computer program is executed by a processor, steps in the foregoing method embodiments may be implemented. The computer program includes computer program code. The computer program code may be in a source code form, an object code form, an executable file form, some intermediate forms, or the like. The computer-readable medium may at least include: any entity or apparatus that can carry computer program code to a first device, a recording medium, a computer memory, a read-only memory (ROM, Read-Only Memory), a random access memory (RAM, Random Access Memory), an electrical carrier signal, a telecommunication signal, and a software distribution medium, for example, a USB flash drive, a removable hard disk, a magnetic disk, or an optical disc. In some jurisdictions, the computer-readable medium cannot be an electrical carrier signal or a telecommunication signal according to legislation and patent practice.

An embodiment of this application further provides a chip. The chip includes a processor. The processor is coupled to a memory, and the processor invokes a computer program stored in the memory, to implement steps in any method embodiment of this application. The chip may be a single chip or a chip module including a plurality of chips.

In the foregoing embodiments, descriptions of the embodiments have respective focuses. For a part that is not described or recorded in detail in an embodiment, refer to the related description in another embodiment.

A person of ordinary skill in the art may be aware that examples of units and method steps described with reference to embodiments disclosed in this specification can be implemented by electronic hardware or a combination of computer software and electronic hardware. Whether these functions are implemented by hardware or software depends on particular applications and design constraint conditions of the technical solutions. A person skilled in the art may use different methods to implement the described functions for each particular application, but it should not be considered that this implementation goes beyond the scope of this application.

The foregoing embodiments are merely used to describe the technical solutions of this application, but not limit the technical solutions of this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the spirit and scope of the technical solutions of embodiments of this application, all of which shall fall within the protection scope of this application.

## Claims

1. A video duration adjustment method, comprising:
receiving a first voice instruction, wherein the first voice instruction carries a first keyword;
displaying a cover of a first video on a first interface in response to the first voice instruction, wherein the first video is generated by using media materials, in an electronic device, related to the first keyword, and duration of the first video is first duration;
receiving a second voice instruction for adjusting the duration of the first video; and
displaying a cover of a second video on the first interface in response to the second voice instruction, wherein duration of the second video is second duration, and the second video comprises a part or all of content of the first video.

2. The method according to claim 1, wherein before the displaying a cover of a second video on the first interface, the method further comprises:
obtaining calculated duration of the second video based on the second voice instruction; and
adjusting the content of the first video based on the calculated duration of the second video to obtain the second video.

3. The method according to claim 2, wherein the obtaining calculated duration of the second video based on the second voice instruction comprises:
obtaining expected change duration between the second video and the first video based on the second voice instruction, wherein the expected change duration is determined based on duration indicated by the second voice instruction;
obtaining a duration change constraint condition;
obtaining a duration change value based on the expected change duration and the duration change constraint condition; and
obtaining the calculated duration of the second video based on the first duration of the first video and the duration change value.

4. The method according to claim 3, wherein the obtaining expected change duration between the second video and the first video based on the second voice instruction comprises:
when the second voice instruction indicates to extend or shorten the first video by third duration, the expected change duration is the third duration;
when the second voice instruction indicates to change the duration of the first video to fourth duration, the expected change duration is a difference between the fourth duration and the first duration; or
when the second voice instruction indicates to change the duration of the first video to be greater than or less than fifth duration, the expected change duration is a difference between the fifth duration and the first duration.

5. The method according to claim 3, wherein the obtaining a duration change constraint condition comprises:
calculating a first duration change constraint condition, wherein the first duration change constraint condition is: a first minimum value of a duration change is 0, a first maximum value of the duration change is a first percentage of expected duration of the second video, and the expected duration of the second video is determined based on the duration indicated in the second voice instruction;
obtaining a second duration change constraint condition, wherein a second maximum value and a second minimum value of the duration change are set in the second duration change constraint condition; and
obtaining the duration change constraint condition based on the first duration change constraint condition and/or the second duration change constraint condition.

6. The method according to claim 5, wherein the obtaining the duration change constraint condition based on the first duration change constraint condition and/or the second duration change constraint condition comprises:
when the first maximum value is less than the second minimum value, the duration change constraint condition is that the duration change value is the second minimum value;
when the first maximum value is greater than the second maximum value, the duration change constraint condition is the second duration change constraint condition; or
when the first maximum value is greater than or equal to the second minimum value and is less than or equal to the second maximum value, the duration change constraint condition is that a minimum value of the duration change is the second minimum value, and a maximum value of the duration change is the first maximum value.

7. The method according to any one of claims 3 to 6, wherein the obtaining a duration change value based on the expected change duration and the duration change constraint condition comprises:
when the expected change duration falls within a range of the duration change constraint condition, the duration change value is the expected change duration;
when the expected change duration is less than a minimum value in the duration change constraint condition, the duration change value is the minimum value in the duration change constraint condition; or
when the expected change duration is greater than a maximum value in the duration change constraint condition, the duration change value is the maximum value in the duration change constraint condition.

8. The method according to any one of claims 3 to 7, wherein the obtaining the calculated duration of the second video based on the first duration of the first video and the duration change value comprises:
when the expected duration of the second video is greater than the first duration of the first video, the calculated duration of the second video is a sum of the first duration of the first video and the duration change value; or
when the expected duration of the second video is less than the first duration of the first video, the calculated duration of the second video is a difference between the first duration of the first video and the duration change value.

9. The method according to any one of claims 2 to 8, wherein before the adjusting the content of the first video based on the calculated duration of the second video to obtain the second video, the method further comprises:
determining whether the calculated duration of the second video falls within a first range;
if the calculated duration of the second video is less than a minimum value of the first range, updating the calculated duration of the second video to the minimum value of the first range; or
if the calculated duration of the second video is greater than a maximum value of the first range, updating the calculated duration of the second video to the maximum value of the first range; and
adjusting the content of the first video based on the calculated duration of the second video to obtain the second video.

10. The method according to claim 9, wherein the first video comprises one or more sub-segments, each sub-segment corresponds to a parent segment, and each sub-segment is obtained through clipping from the corresponding parent segment; and
the minimum value of the first range is preset minimum video production duration, the maximum value of the first range is a minimum value in a first value and preset maximum video production duration, and the first value is a sum of duration of parent segments in which sub-segments in the first video are located.

11. The method according to any one of claims 2 to 10, wherein before the displaying a cover of a first video on a first interface, the method further comprises:
obtaining, from the electronic device, the media materials related to the first keyword;
obtaining each corresponding parent segment from each media material; and
clipping, based on the preset minimum video production duration and the preset maximum video production duration, a sub-segment from each obtained parent segment to generate the first video, wherein the duration of the first video is greater than or equal to the minimum video production duration and is greater than or equal to the maximum video production duration.

12. The method according to claim 11, wherein the first video comprises a first quantity of sub-segments; and
the adjusting the content of the first video based on the calculated duration of the second video to obtain the second video comprises:
obtaining a first difference based on the calculated duration of the second video and the first duration;
obtaining theoretical average change duration of each sub-segment in the first video based on the first difference and the first quantity;
determining, for a first sub-segment, whether theoretical duration of the first sub-segment falls within a preset sub-segment duration interval, wherein the first sub-segment is any sub-segment in the first video, the theoretical duration of the first sub-segment is a sum of original duration of the first sub-segment, theoretical average change duration, and a difference of a previous sub-segment, and the difference of the previous sub-segment is a difference between theoretical duration of the previous sub-segment and actual duration of the previous sub-segment;
if the theoretical duration of the first sub-segment falls within the sub-segment duration interval, actual duration of the first sub-segment is the theoretical duration of the first sub-segment;
if the theoretical duration of the first sub-segment is less than a minimum value of the sub-segment duration interval, actual duration of the first sub-segment is the minimum value of the sub-segment duration interval; or
if the theoretical duration of the first sub-segment is greater than a maximum value of the sub-segment duration interval, actual duration of the first sub-segment is the maximum value of the sub-segment duration interval;
obtaining a difference of the first sub-segment based on the theoretical duration of the first sub-segment and the actual duration of the first sub-segment; and
after actual duration of each sub-segment in the first video is obtained, using the actual duration of each sub-segment as duration of each sub-segment in the first video to obtain the second video, wherein the second duration of the second video is a sum of the actual duration of each sub-segment.

13. The method according to claim 12, wherein each sub-segment in the first video corresponds to one parent segment, each sub-segment is obtained through clipping from the corresponding parent segment, and the using the actual duration of each sub-segment as duration of each sub-segment in the first video comprises:
adjusting, for the first sub-segment, a start time and/or an end time of the first sub-segment in a first parent segment to obtain a first sub-segment after duration adjustment, wherein the first parent segment is a parent segment in which the first sub-segment is located, and a difference between an adjusted end time and an adjusted start time of the first sub-segment is the actual duration of the first sub-segment.

14. The method according to claim 2, wherein when the second voice instruction is to adjust the duration of the first video to be less than sixth duration, before the obtaining calculated duration of the second video based on the second voice instruction, the method further comprises:
determining that the first duration is greater than the sixth duration; or
when the second voice instruction is to adjust the duration of the first video to be greater than sixth duration, before the obtaining calculated duration of the second video based on the second voice instruction, the method further comprises:
determining that the first duration is less than the sixth duration.

15. An electronic device, comprising one or more processors and one or more memories, wherein the one or more memories are coupled to the one or more processors, and the one or more memories are configured to store a computer program; and when the one or more processors execute the computer program, the electronic device is enabled to perform the method according to any one of claims 1 to 14.

16. A chip system, wherein the chip system is applied to an electronic device, the chip system comprises one or more processors, and the processor is configured to invoke computer instructions to enable the electronic device to perform the method according to any one of claims 1 to 14.

17. A computer-readable storage medium, comprising a computer program, wherein when the computer program is run on an electronic device, the electronic device is enabled to perform the method according to any one of claims 1 to 14.
